# EUROPÄISCHE PATENTSCHRIFT

(11) **EP 3 194 681 B1**
(45) Veröffentlichungstag und Bekanntmachung des Hinweises auf die Patenterteilung: **18.07.2018**
(21) Anmeldenummer: 15766467.3
(22) Anmeldetag: 17.09.2015
(51) Int. Cl.: B32B 37/14, B32B 3/12, B21D 47/00, B29D 99/00, E04C 2/36, B31D 3/00

(54) **WABE, INSBESONDERE VERFORMBARE WABE, FÜR LEICHTBAUTEILE SOWIE WABENBLOCK ZUR HERSTELLUNG DER WABE UND ENTSPRECHENDES HERSTELLUNGSVERFAHREN**
HONEYCOMB, IN PARTICULAR DEFORMABLE HONEYCOMB, FOR LIGHTWEIGHT COMPONENT AND A BLOCK FOR PRODUCTION OF THE HONEYCOMB AND CORRESPONDING PRODUCTION METHOD.
NID D'ABEILLES, EN PARTICULIER NID D'ABEILLES POUR COMPOSANTS LÉGERS ET BLOC POUR FABRIQUER LE NID D'ABEILLES ET PROCÉDÉ DE FABRICATION CORRESPONDANT

(30) Priorität: 17.09.2014 LU 92548
(43) Veröffentlichungstag der Anmeldung: 26.07.2017
(73) Patentinhaber: Euro-Composites S.A., 6401 Echternach (LU)
(72) Erfinder: ALTER, Rolf-Mathias, L-6419 Echternach (LU); WINTGENS, Willy, L-9907 Troisvierges (LU); WILLERT, Michael, 54298 Welschbillig-Ittel (DE); SCHMITT, Ralf, 54669 Bollendorf (DE)
(74) Vertreter: Lippert Stachow Patentanwälte Rechtsanwälte
(86) Internationale Anmeldenummer: PCT/EP2015/071381
(87) Internationale Veröffentlichungsnummer: WO 2016/042107

(56) Entgegenhaltungen:
- EP-A1- 0 467 286
- DE-U1-202012 005 289
- GB-A- 750 610
- US-A- 2 608 502
- US-A- 4 118 263
- US-A1- 2008 145 597

## Beschreibung

### Technisches Gebiet

Die vorliegende Erfindung betrifft allgemein Wabenstrukturen. Die Erfindung betrifft insbesondere eine Wabe für Leichtbauteile bzw. Konstruktionen in Leichtbauweise, insbesondere eine verformbare Wabe für Leichtbauteile mit gekrümmter Oberfläche. Die Erfindung betrifft auch einen Wabenblock und ein Herstellungsverfahren für eine solche Wabe sowie ein Sandwichbauteil mit einer solchen Wabe.

### Stand der Technik

In der Leichtbautechnik ist die Verwendung von Wabe sehr weit verbreitet. Wabe bietet, insbesondere als Kernmaterial eines Verbundbauteils, besondere Vorteile in fast allen Anwendungen, welche hohe Belastbarkeit bei besonders geringem Gewicht verlangen. Typischerweise wird Wabe in Sandwich-Bauteilen als Kernmaterial zwischen zwei Deckschichten eingesetzt, wie z.B. im Gebrauchsmuster DE 8624880 U1 bzw. dem Patent LU 86594 A1 oder im Patent EP 0 579 000 B1 gezeigt.

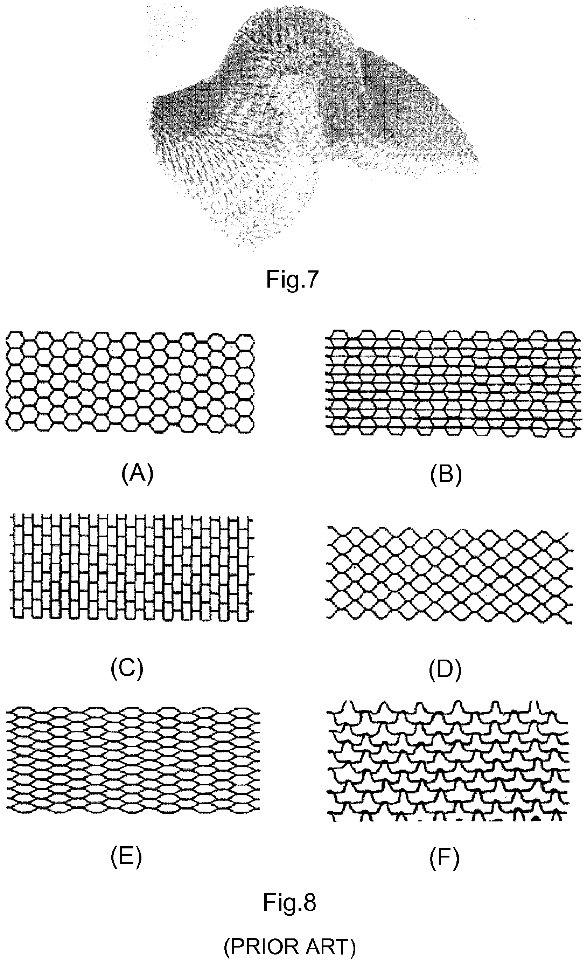

FIG.8(A)-(F) zeigen eine Übersicht der aus dem Stand der Technik bekannten Geometrien von Wabenstrukturen die als Kernmaterial verwendbar sind. Diese Zeichnungen sind dem Fachbuch "Honeycomb Technology: Materials, Design, Manufacturing, Applications and Testing", Tom Bitzer, Springer Science & Business Media, 1997 (ISBN 0412540509) entnommen.

Besonders weit verbreitet sind Wabenstrukturen, bei welchen die Wabenzellen einen regelmäßigen hexagonalen Querschnitt aufweisen (vgl. FIG.8(A)).

Verfahren zur Herstellung von Wabe mit hexagonalem Querschnitt sind z.B. in der Patentanmeldung EP 0 467 286 A1 oder dem Patent US 4,118,263 A beschrieben, es handelt sich dabei jeweils um Expansionsverfahren.

Waben erzielen bei Verwendung als Kernmaterial in Sandwich-Bauteilen hohe Widerstandsfähigkeit und Steifigkeit bei besonders geringem Gewicht. Sandwich-Paneele mit Hexagonal-Waben als Kernmaterial werden beispielsweise in der Luftfahrttechnik, z.B. für die Innenausstattung eines Flugzeugs, aber auch als Strukturbauteile in vielen anderen Bereichen sehr häufig eingesetzt.

In vielen Anwendungsfällen wird ferner angestrebt, Sandwich-Bauteile bereitzustellen, welche die Vorteile konventioneller Wabenstrukturen aufweisen und zugleich die Herstellung nichtebener, komplex gekrümmter Raumformen erlauben. Hierzu ist es wünschenswert, die Wabe an sich hinreichend flexibel, d.h. räumlich verformbar zu gestalten. Besonders wünschenswert ist es, die Wabe um mehrere Krümmungsachsen d.h. entlang komplexer, zusammengesetzter Kurven (Engl. "compound curves") verformen zu können. Hierbei gilt häufig die weitere Anforderung, dass die Waben- bzw. Zellstege trotz Verformung in einem möglichst senkrechten Winkel an die Deckschichten des Verbunds stoßen sollen, wenn die Wabe als Kern eines Sandwich-Bauteils eingesetzt wird.

Unter verformbarer Wabe wird vorliegend eine Wabe verstanden, welche im Vergleich zu konventionellen Wabengeometrien, z.B. nach dem Stand der Technik in FIG.8(A)-(B) und FIG.8(D)-(E), einen spürbar geringeren antiklastischen Effekt aufweist, zumindest bei Krümmung um eine Achse. Unter antiklastischem Effekt versteht man in der Wabentechnik die meist unerwünschte Tendenz zur gegensinnigen Krümmung um eine Achse quer zur gewünschten Krümmungsachse (Tendenz zur Sattelbildung bei Krümmung um eine Achse).

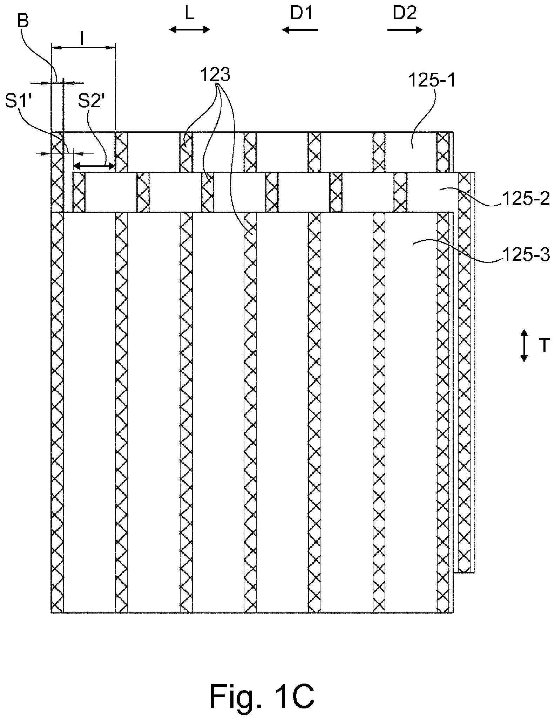

Es ist bereits bekannt, dass überexpandierte Hexagonalwabe eine Krümmung begrenzt um eine Achse ermöglicht. Komplexere Geometrien mit mehrfacher Krümmung gestatten solche überexpandierte Waben, vgl. FIG.1(C), jedoch praktisch nicht und sind demnach nur begrenzt verformbar im vorliegenden Sinne.

Ansätze zur Herstellung verformbarer Wabe sind beispielsweise aus den US Patenten Nr. 3'227'600 A und Nr. 3'342'666 A bekannt. Solche Waben können zu komplexen Strukturen mit Krümmungen um mehrere Achsen geformt werden, beispielsweise in kugelförmige oder korbförmige Oberflächen. Im Gegensatz zu typischen Waben mit einem regelmäßigen Sechseck als Zellquerschnitt, weisen Waben entsprechend den vorgenannten Patenten kein oder nur geringfügiges antiklastisches Verhalten auf, d.h. sind gut im Raum verformbar. Gemäß diesen beiden vorgenannten Patenten wird dies erreicht, indem die einzelnen Streifen, aus welchen sich die Wabe zusammensetzt, vor ihrem Zusammenfügen durch ein Walz-, Stanz- oder Press-Profilier-Verfahren wellenartig umgeformt werden, d.h. zuerst einem sogenannten Prägeverfahren unterzogen werden, und erst danach zu einer komplexen Geometrie verbunden werden. So weist beispielsweise eine Wabe gemäß US 3'227'600 A einen komplexen Zellquerschnitt auf, welcher in etwa Ahornblattförmig gestaltet ist und ein Dekagon mit 10 Schenkeln (Kanten) bildet. Noch komplexer und aufwendiger in der Herstellung ist die Geometrie bei der Lösung nach US 3'342'666 A.

Ein weiterer Ansatz zur Herstellung verformbarer Wabe ist aus dem Patent GB 750,610 A bekannt. Es handelt sich dabei ebenfalls um ein Prägeverfahren bei dem die zu fügenden Metallstreifen bzw. - bänder durch Prägung gewellt werden, bevor diese miteinander verklebt werden. Die regelmäßig gewellten Streifen ("corrugated strips"), genau genommen die zu verbindenden geraden Bereiche, werden hierbei nicht - wie für Hexagonal-Wabe üblich - vollflächig bzw. bündig aufeinander gelegt, sondern jeweils regelmäßig in etwa hälftig verschoben. Es wird somit nur etwa die halbe verfügbare Fläche als Klebefläche genutzt. Durch die Verschiebung entsteht so eine vom regelmäßigen Hexagon stark abweichende Zellgeometrie, die gute Verformbarkeit mit geringem antiklastischem Effekt erzielen soll. Dieser Ansatz ist einfacher als die beiden vorgenannten, er ermöglicht jedoch keine Herstellung im Expansionsverfahren. Zudem bedingt die reduzierte Klebefläche eine schwächere Verbindung (insbesondere in W-Richtung), vor allem bei großen Zellen.

Die gewünschte Verformbarkeit wird bei diesen Lösungen dadurch erreicht, dass, zwischen den stoffschlüssigen Verbindungsstellen einzelner vorprofilierter Bänder (Engl. "ribbon") der Wabe, eine Länge an verformbarem Material vorliegt. Nachteilig ist aber insbesondere das relativ aufwendige Herstellungsverfahren einerseits und andererseits die bezogen auf die Länge der einzelnen Bänder relativ geringe Verbindungsdichte, was die Druck-, Schub- und Scherfestigkeit beeinträchtigt. Nachteilig beim Herstellungsverfahren ist vor allem, dass die einzelnen Bahnen bzw. Bänder durch ein Prägeverfahren vorgeformt werden müssen und ein reines Expansionsverfahren nicht möglich ist.

Eine weitere bekannte Lösung bilden die unter dem Markennamen FLEX-CORE® und DOUBLE-FLEX® von der Fa. HEXCEL Corp. vertriebenen verformbaren Waben. Wabe vom Typ FLEX-CORE® ist in FIG.8(F) schematisch gezeigt. Auch bei dieser Wabe ist der Zellquerschnitt näherungsweise Ahornförmig. Das Herstellungsverfahren ist, ähnlich wie bei US 3'342'666A oder US 3'227'600A, sehr aufwendig. Wabe vom Typ DOUBLE-FLEX® hat einen Aufbau ähnlich der aus dem US Patent Nr. 3'340'023 A vorbekannten Wabenstrukturen.

Die letztgenannten Wabentypen haben einen gattungsgemäßen Aufbau nach dem Oberbegriff aus Anspruch 1 und bilden den Ausgangspunkt der Erfindung. Gemäß US2973294A ist eine Wabenkonstruktion bekannt, die Waben mit einer möglichst idealen hexagonalen Form anstrebt, die in ihrer Größe von außen nach innen abnehmen. Eine weitere verformbare Wabenstruktur ist aus der WO 94/17993 vorbekannt. Hierbei wird durch eine komplexe Stufenstruktur innerhalb der Wabenzellwände eine besonders synklastische, d.h. gut im Raum verformbare Struktur erzielt. Das hierzu erforderliche Herstellungsverfahren ist jedoch noch aufwendiger als die Herstellungsverfahren gemäß US 3'342'666A, US 3'227'600A oder aus US 3'340'023A.

### Aufgabe der Erfindung

Eine erste Aufgabe der vorliegenden Erfindung ist es mithin, eine Wabe mit verbesserten Eigenschaften bereitzustellen, welche sich verhältnismäßig einfach, insbesondere im reinen Expansionsverfahren, herstellen lässt. Eine weitergehende Aufgabe ist es, Wabe vorzuschlagen die trotz guter räumlicher Verformbarkeit, insbesondere guten synklastischen Eigenschaften, hohen Festigkeitsanforderungen genügt. Andererseits soll ein besonders einfaches Herstellungsverfahren für synklastische Wabe vorgeschlagen werden.

### Allgemeine Beschreibung der Erfindung

Eine gattungsgemäße Wabe für Leichtbauteile, insbesondere eine verformbare Wabe für Leichtbauteile mit einer gekrümmten Oberfläche umfasst längliche Bänder aus blatt- oder folienartigem Material mit einer Längsrichtung (L). Die Bänder liegen in Querrichtung (W) quer zur Längsrichtung flächig gegenüber. Zwischen zwei gegenüberliegenden Bändern ist eine Vielzahl Verbindungsbereiche, insbesondere Klebestreifen vorgesehen, welche die Bänder in Querrichtung (W) abschnittsweise und in Richtung der Wabenstärke (T) vorzugsweise durchgehend stoffschlüssig miteinander verbinden. Die Bänder sind in regelmäßigen Abständen entlang der Längsrichtung eines Bands mit periodischem und zwischen allen Verbindungsbereichen identischem Mittenabstand angeordnet. Die Wabe umfasst wabenartige Zellen, welche Hohlräume zwischen den Bändern bilden.

Erfindungsgemäß kann die gewünschte Verformbarkeit der Wabe dadurch erzielt werden, dass der Versatz zweier aufeinanderfolgender Reihen von Verbindungsbereichen, d.h. zwischen den Bögen bzw. Bändern von zwei aufeinander folgenden Zellreihen spürbar bzw. um ein vorbestimmtes Maß außermittig ist. Der vorgegebene Versatz ist hierbei in Längsrichtung und bezogen auf den periodischen Mittenabstand bzw. das Mittellot der Verbindungsbereiche betrachtet.

Eine entsprechende Geometrie soll zumindest in Teilbereichen der Wabe, vorzugsweise in einem überwiegenden Flächenanteil, vorliegen.

Erfindungsgemäß wird dies bei einer Wabe gemäß dem Oberbegriff aus Anspruch 1 insbesondere dadurch erreicht, dass - bezogen auf drei aufeinander folgende Bänder - ein vorgegebener Versatz der Verbindungsbereiche zwischen erstem und zweitem Band der Folge zu den Verbindungsbereichen zwischen zweitem und drittem Band zu einer Seite der Längsrichtung hin deutlich geringer ist als zu einer anderen zweiten Seite der Längsrichtung hin. So wird erreicht, dass zumindest ein Teil der Zellen, im Zustand wenn die Wabe zumindest teilweise in Querrichtung expandiert und noch nicht gekrümmt ist, im Querschnitt (betrachtet in der Hauptebene bzw. L/W-Ebene) eine Form aufweisen, mit zumindest einem längeren Schenkel (d.h. einer Seite oder Kante) und vorzugsweise zumindest einem kürzeren Schenkel. Der längere Schenkel der Querschnittsform entspricht hierbei dem größeren Versatz und der kürzere Schenkel dem geringeren Versatz. Die Abmessung des kürzeren Schenkels in Bandrichtung kann verschwindend gering sein bzw. gegen Null tendieren, hat jedoch in bevorzugten Ausführungsformen ein vorbestimmtes Mindestmaß.

Im Fall eines verschwindend gering vorgegebenen Versatz zu einer Seite hin hat die Querschnittsform entweder nur vier oder nur fünf als solche erkennbare Schenkel, bevorzugt sind jedoch Ausführungsformen mit sechs Schenkeln. Die im Querschnitt resultierende Form kann insbesondere in der Art eines unregelmäßigen Polygons und/oder als zur T/W-Ebene asymmetrische Form ausgeführt sein. Die Querschnittsform kann näherungsweise einem Vieleck entsprechen.

Dem vorbestimmten Versatz entsprechend steht zumindest an einem längeren Schenkel, d.h. zumindest an einem Wabensteg jeder Zelle, eine gewisse Länge an Material zur Verfügung, welches in L- und/oder W-Richtung relativ spannungsfrei ist und kontrolliert gestreckt bzw. gestaucht werden kann. Somit ist jeweils in diesem Bereich der Wabenzelle eine quasi spannungsfreie Verformung möglich. Dies kann bereits allein durch eine Verlagerung im Versatz der alternierend angeordneten Verbindungsbereiche erreicht werden, d.h. ohne dass der Gesamtumfang der einzelnen Zelle deutlich grösser ist als bei bekannten Waben. Der kürzere Schenkel kann ebenfalls zur Verformbarkeit beitragen, ist hierzu jedoch nicht zwingend erforderlich.

Im Ergebnis weist die erfindungsgemäße Wabenstruktur insgesamt gute synklastische Eigenschaften und hohe Stabilität auf. Zudem haben Waben mit der erfindungsgemäß hergestellten Unregelmäßigkeit in der Polygonform eine überraschend geringe Tendenz zu brechen, auch bei engen Krümmungsradien bzw. kleinen Schmiegekreisen (Engl. osculating circle). Ferner kann eine weitgehend rechtwinklige Lage der Wabenstege zu angrenzenden Deckschichten gewährleistet werden.

In der Praxis ist die Herstellung im reinen Expansionsverfahren bevorzugt, d.h. eine Herstellung ohne vorgelagertes Prägeverfahren. Im Expansionsverfahren kann die erfindungsgemäße Wabenstruktur mit relativ geringem Aufwand erzielt werden, nämlich bei der Ablage des blatt- bzw. folienartigen Materials vor dem Verpressen und der Expansion. Hierbei erfolgt das Stapeln bzw. Ablegen der mit Verbindungsmitteln zu versehenden, z.B. mit Kleberlinien bedruckten, Bögen bzw. Blätter dergestalt, dass der Versatz der Verbindungsbereiche von nachfolgend gestapelten Bögen bzw. Blättern nicht mittig angeordnet wird, sondern um einen festgelegten, vorbestimmten Betrag geometrisch vom Mittellot abweicht. Hier bedeutet Mittellot die Mittelsenkrechte der Mittelpunkte benachbarter Verbindungsbereiche desselben Bogens vor Expansion. Bei Klebeverbindungen ergibt sich so bereits im abgelegten Stapel ein vordefinierter Versatz der Verbindungsbereiche, der asymmetrisch von Bogen zu Bogen bzw. Blatt zu Blatt erfolgt, d.h. zur einen Seite ein geringerer Versatz als zur anderen Seite vorliegt.

Es sei angemerkt, dass die vorgegebene Abmessung des Versatzes - unabhängig vom Expansionszustand der Wabe - zu verstehen ist, wie der jeweils entlang dem Verlauf des angrenzenden bzw. zu verbindenden Bandes gemessene Abstand der Projektion auf dieses Band, d.h. stets in Verlaufrichtung zu betrachten ist.

Das Band kann gegebenenfalls nichtlinear verlaufen. Unter Polygonform werden mithin auch solche eckige Formen verstanden, bei welchen Schenkel bzw. Kanten nicht geradlinig verlaufen. Ferner bedeutet der Begriff Band (Engl. "ribbon") vorliegend ganz allgemein jegliche Art eines längeren, dünnen und verhältnismäßig schmalen Streifens. Der Begriff Band umfasst insbesondere aber nicht ausschließlich streifenartige Gebilde, welche im Expansionsverfahren durch Auftrennen bzw. Zersägen eines expandierten Blocks, der aus gestapelten folienartigen Blättern gebildet wurde, in einzelne Wabenscheiben entstehen. Auch im Prägeverfahren vorprofilierte Streifen, die einzeln zu einer Wabe verbunden werden vorliegend als Bänder verstanden.

Typischerweise hat jedes Band jedenfalls in einer fertiggestellten Wabe eine Abmessung in Längsrichtung um ein Vielfaches, meist zumindest um mindestens eine Größenordnung, grösser als seine Breite (in Richtung der Wabenstärke), welche wiederum typisch um ein Mehrfaches, meist zumindest um mindestens eine Größenordnung, grösser ist als die Dicke bzw. Stärke des Bandes (in Querrichtung der Wabe). Die Begriffe Bogen bzw. Bögen (Engl. sheet bzw. sheets) bedeuten vorliegend ein Stück bzw. Stücke aus einem im Verhältnis zu den Flächenabmessungen dünnwandigem Material, z.B. papierartiges oder folienartiges Material, das typischerweise auf ein vorbestimmtes Format (mit oder ohne Normgröße) zugeschnitten ist.

In einer Ausführungsform ist vorgesehen, dass jeder außermittige Versatz jeweils stets zur ersten Seite hin deutlich geringer ist. Diese Ausführung zeigt in der Praxis besonders gute Verformbarkeit. Alternativ kann ein außermittiger Versatz, jeweils zur ersten Seite und zur zweiten Seite abwechselnd bzw. richtungsalternierend vorgesehen werden. Diese Ausführung hat gute Festigkeitswerte.

Bevorzugt wird der vordefiniert außermittige Versatz abwechselnd aussetzend wiederholt, d.h. dass auch nicht zueinander versetzte Verbindungsbereiche, welche technisch auf gleicher Höhe in Längsrichtung liegen, in der Wabe vorhanden sind. Vorzugseise ist hierbei jede zweite Gruppe von Verbindungsbereichen unversetzt, d.h. dass die Verbindungsbereiche, bezogen auf vier beliebige in Querrichtung (W) aufeinander folgende Bänder, jeweils zwischen erstem und zweiten Band sowie zwischen drittem und viertem Band unversetzt sind. Auf diese Weise lässt sich in einfacher Weise gute Verformbarkeit bei guten Festigkeitswerten realisieren.

Aufgrund guter Verformbarkeit besonders ist also eine Gestaltung, in welcher versetzte und nicht versetzte Verbindungsbereiche sich stets abwechseln bzw. zyklisch aufeinander folgen. In diesem Fall sind in jeder beliebigen Abfolge von vier Bändern, lediglich die Verbindungsbereiche zwischen erstem und zweitem Band zu den Verbindungsbereichen zwischen zweitem und drittem Band außermittig versetzt. Die Wabe kann jedoch auch ohne unversetzte Verbindungsbereiche, d.h. ausschließlich und durchgehend mit außermittigem Versatz gestaltet werden, wobei in Querrichtung aufeinander folgende Verbindungsbereiche stets zueinander außermittig versetzt sind. Diese besonders einfache Ausführung zeigt in der Praxis zumindest um eine Achse gute Verformbarkeit.

In bevorzugten Ausführungsformen wird der asymmetrische bzw. außermittige Versatz derart regelmäßig und hinreichend häufig vorgesehen, dass zumindest ein überwiegender Anteil der Waben im Querschnitt in der L/W-Ebene, eine Form mit mindestens einem kurzem und einem langen Schenkel aufweisen, z.B. in der Art eines unregelmäßigen Polygons.

Eine gute Verformbarkeit lässt sich erzielen, wenn das Verhältnis des geringeren Versatzes zum größeren Versatz ≤ 0,45, insbesondere ≤ 0,4 beträgt. Gute Verformbarkeit lässt sich ebenfalls erzielen, wenn das Verhältnis des geringeren Versatzes zum Mittenabstand zwischen den Verbindungsbereichen, ≤ 2/5, insbesondere ≤ 1/3 beträgt, wobei die Verbindungsbereiche bezogen auf ein Band typischerweise periodisch beabstandet sind.

Bei günstigen Wabengeometrien beträgt die Breite der Verbindungsbereiche bezogen auf den regelmäßigen Mittenabstand zwischen den Verbindungsbereichen mindestens 1/8 und höchstens 1/3, meist vorzugsweise mindestens 1/6 und höchstens 1/4. Insbesondere bei derartigen Abmessungen und bei in Richtung der Wabenstärke verlaufenden streifenartigen Verbindungsbereichen, ist es vorteilhaft, wenn der geringere Versatz größer als oder zumindest gleich groß ist wie die Breite der Verbindungsbereiche. In diesem Fall definieren die Verbindungsbereiche die kleinste Schenkelabmessung des unregelmäßigen Polygons. Die dem geringeren Versatz entsprechenden Schenkel können jedoch auch eine kleinere Abmessung haben als die Verbindungsbereiche.

Praktische Versuche zeigten, dass eine geeignete Mindestlänge des dem kleineren Versatz entsprechenden kürzeren Schenkels im unregelmäßigen Polygonquerschnitt der Wabenzellen erreicht wird, wenn der geringere Versatz um mindestens einen Faktor 1,5 größer ist als die Breite der Verbindungsbereiche. Da eine gute Verformbarkeit insbesondere durch den im Verhältnis längeren Schenkel im unregelmäßigen Polygonquerschnitt erreicht wird, ist es bei der vorgenannten Anordnung vorteilhaft, wenn das Verhältnis des größeren Versatzes zur Breite der Verbindungsbereiche so gewählt ist, dass dieses Verhältnis ≥ 2 und ≤ 4 beträgt. Vorzugsweise sollte letztgenanntes Verhältnis ≥ 2,25 und ≤ 3,75 betragen.

Als besonders günstig erwies sich auch eine Geometrie, bei welcher der Querschnitt in unregelmäßiger Polygonform insgesamt mindestens fünf, bevorzugt genau sechs Schenkel (bzw. Kanten), d.h. sechs Ecken, aufweist aber im Wesentlichen kelchförmig ist, beispielsweise etwa sektkelchförmig. Demnach ist es vorteilhaft, wenn der unregelmäßige Polygonquerschnitt jeweils zwei längere Schenkel entsprechend dem größeren Versatz und jeweils zwei kürzere Schenkel entsprechend dem geringeren Versatz aufweist. Die beiden anderen Schenkel des Sechsecks entsprechen dann jeweils der Breite der angrenzenden Verbindungsbereiche bzw. der Kleberstreifen. Die Breite der Verbindungsbereiche kann in etwa der Abmessung des kürzeren Schenkels entsprechen, was die geometrischen Verhältnisse vereinfacht.

Insbesondere bei der letztgenannten Ausführungsform ist es vorteilhaft, wenn der in Querrichtung gemessene Abstand zwischen zwei etwa parallelen Reihen aufeinander folgender Verbindungsbereiche zumindest leicht kleiner ist, als die Abmessung des geringeren Versatzes in Längsrichtung. Dies kann durch eine geeignete Expansion erreicht werden, bei welcher Überexpansion zu vermeiden ist.

Als besonders gut verformbar erweisen sich Geometrien, bei welchen der längere Schenkel spürbar gekrümmt verläuft, insbesondere tangensartig bzw. S-kurvenförmig.

Nicht zwingend für die Verformbarkeit erforderlich, jedoch letztere und auch eine möglichst hohe Isotropie fördernd, ist eine Ausführungsform, bei welcher der erfindungsgemäße, ungleiche Versatz sich regelmäßig in der Wabe wiederholt, vorzugsweise in Längsrichtung und in Querrichtung. Besonders bevorzugt ist eine Ausführungsform, bei welcher die Verbindungsbereiche, bezogen auf in Querrichtung aufeinander folgende Bänder, jeweils zwischen erstem und zweitem Band sowie zwischen drittem und viertem Band auf gleicher Höhe in Längsrichtung betrachtet liegen. Mit anderen Worten, der asymmetrische Versatz ist bevorzugt derart abwechselnd aussetzend angeordnet, dass in Querrichtung bzw. in Richtung der Stapelhöhe, die Verbindungsbereiche jeweils jeden zweiten Blatts bzw. Bogens sich überlagernd auf gleicher Höhe in Längsrichtung befinden.

Besonders im Falle der letztgenannten Ausführungsform wird eine einfache Herstellung dadurch ermöglicht, dass ein einfacher Versatz jeweils zur gleichen Seite der Längsrichtung hin vorgesehen ist. Grundsätzlich kann jedoch ein doppelter Versatz (d.h. ein zur einen und anderen Seite hin abwechselnder Versatz) vorgesehen sein. Der Versatz kann sich in Betrag und Abfolge unterscheiden, wird aber vorzugsweise zyklisch wiederholt. Bei einem einfachen Versatz wird jedoch erreicht, dass überwiegend alle Waben im Querschnitt in der Hauptebene eine Form in der Art eines unregelmäßigen Polygons aufweisen, insbesondere einen kelchförmigen Querschnitt.

Die vorgeschlagene Wabengestaltung und deren Herstellungsverfahren eignen sich nicht ausschließlich, aber besonders zur Verwendung von Bändern aus papierartigem Fasermaterial oder Bändern aus Metallfolie. Als Fasermaterial kann insbesondere ein auf Glasfaser oder Aramid-Faser basiertes Papier, Gewebe oder Folienmaterial verwendet werden, welches gegebenenfalls mit Harz vorgetränkt und/oder nachträglich getränkt ist und durch Härten zu einem Faserverbundkunststoff (FVK) fertiggestellt werden kann. Alternativ zu oder in Kombination mit FVK können auch folienartige Materialien aus einem technischen Thermoplast und/oder Duroplast eingesetzt werden. Als Metallfolie zur Bereitstellung der Bänder kommt, wegen des guten Verhältnisses von Gewicht zu Festigkeit, insbesondere Aluminiumfolie in Betracht. Auch Edelstahl- oder Kupferfolie ist bei besonderen Anforderungen, etwa an die chemische Beständigkeit oder Leitfähigkeit, in erfindungsgemäßen Waben verwendbar.

Es liegt ebenfalls im Rahmen der Erfindung mehrschichtiges homogenes oder inhomogenes Folienmaterial zu verwenden, z.B. Laminate aus verschiedenen Metall- und/oder Kunststoff-Folien. Die Verbindungsbereiche können hierbei durch Klebung, Schweißen, Löten und dgl. erzeugt werden.

Um die Verformbarkeit nicht ungünstig zu beeinträchtigen, ist es insbesondere bei Faserverbund-Waben günstig, die geometrischen Verhältnisse derart zu wählen, dass die Wabenstärke betragsmäßig weniger als das Sechsfache, vorzugsweise weniger als das Vierfache der Abmessung des längeren Schenkels in Längsrichtung beträgt. Es können jedoch in Abhängigkeit des Materials und Herstellungsverfahrens auch größere Wabenstärken realisiert werden, z.B. mit Bändern aus Material, das zur thermischen Verformung geeignet ist. Die gewünschte Umformung kann, insbesondere bei größeren Wabenstärken, unter Wärmeeinwirkung erfolgen.

Im Sinne der geometrischen Verformbarkeit ist es ebenfalls vorteilhaft, wenn der geringere Versatz betragsmäßig um ein Vielfaches, insbesondere um mindestens das Zehnfache größer ist, als die stärkste verwendete Materialstärke der Bänder der Wabe. Die Erfindung betrifft ebenfalls ein Sandwich-Bauteil nach Anspruch 13, d.h. mit mindestens einer Deckschicht und einer Wabe gemäß einer der o.g. Ausführungsformen als Kern des Sandwichs. Nach Verformen der Wabe kann eine Aushärtung zusammen mit der Deckschicht erfolgen, so dass ein stabiles Sandwichbauteil mit komplex gekrümmter Raumform bzw. gekrümmten Oberflächen hergestellt werden kann. Natürlich kann die erfindungsgemäße Wabe auch für die Herstellung von bereichsweise oder vollständig ebenen bzw. ungekrümmten Bauteilen verwendet werden.

Die Erfindung betrifft ferner einen Wabenblock nach Anspruch 14 als Zwischenprodukt zur Herstellung einer erfindungsgemäßen Wabe, im Expansionsverfahren. Der Wabenblock ist erfindungsgemäß ebenfalls durch den vorbestimmten außermittigen Versatz der Verbindungsbereiche gekennzeichnet.

Schließlich betrifft die Erfindung auch ein besonders einfaches Herstellungsverfahren für Wabe, insbesondere verformbare Wabe, gemäß Anspruch 15.

Das Verfahren umfasst zunächst das stapelartige Ablegen von Bögen aus dünnem blatt- oder folienartigem Material. Hierbei werden die Bögen in einer Querrichtung quer zu einer Längsrichtung der Bögen flächig aufeinander gestapelt. Anschließend erfolgt, in an sich bekannter Weise, ein stoffschlüssiges Verbinden der Bögen in Querrichtung zu einem zusammenhängenden Gebilde ("unexpandierter Block"). Hierzu können z. B. Klebestreifen durch Hitze und/oder Druck an- oder ausgehärtet werden. Unabhängig von der Art der stoffschlüssigen Verbindung wird eine Vielzahl Verbindungsbereiche vorgesehen, welche die Bögen in Querrichtung abschnittsweise stoffschlüssig miteinander verbinden und in regelmäßigen Abständen, nämlich mit periodischem und zwischen allen Verbindungsbereichen identischem Mittenabstand, entlang der Längsrichtung eines Bogens, angeordnet sind. Typischerweise sind die Verbindungsbereiche als einseitig vor dem stapelartigen Ablegen auf die Bögen aufgedruckte Kleberstreifen ausgeführt.

Im Anschluss erfolgt, je nach verwendetem Material, entweder das Expandieren des gesamten Blocks und danach das Trennen des Blocks in einzelne Waben, oder aber das Trennen in einzelne Scheiben und anschließend ein Expandieren der einzelnen Scheiben zu Waben.

Das Expandieren des Blocks erfolgt stets zumindest mit einer Hauptkomponente in der Querrichtung, um wabenartige Zellen mit Hohlräumen zwischen den Bögen bzw. Bändern zu bilden. Das Trennen des Blocks in mehrere einzelne Waben bzw. Scheiben erfolgt typischerweise durch Schneiden im Wesentlichen entlang Trennebenen parallel zur L-/W-Ebene.

Eine verformbare Wabe im Sinne der Erfindung wird in besonders einfacher Weise dadurch hergestellt, dass beim Ablegen darauf geachtet wird, dass bezogen auf drei aufeinander folgende Bögen, ein Versatz der Verbindungsbereiche zwischen erstem und zweitem Bogen zu den Verbindungsbereichen zwischen zweitem und drittem Bogen zu einer Seite der Längsrichtung deutlich geringer ist, als zur anderen Seite der Längsrichtung.

Grundsätzlich kann ein solcher Versatz auch durch ein kombiniertes Präge- und Expansionsverfahren erzielt werden. Besonders einfach ist jedoch die Herstellung, wenn die Bögen oder Bänder unprofiliert bzw. ohne vorhergehen Prägung gestapelt werden, d.h. die Wabe in einem reinen Expansionsverfahren hergestellt wird.

Hinsichtlich der stoffschlüssigen Verbindung kommen neben Klebung alle anderen Stoffschlussarten in Betracht, z.B. ein blattweises Verschweißen und Löten liegen im Rahmen der Erfindung. Die ideale Art der stoffschlüssigen Klebe- oder Schweißverbindung wird in Abhängigkeit des Bogenmaterials gewählt, so kommt z.B. bei Metallfolien ein stoffschlüssiges Verbinden der Bögen durch Diffusionsschweißen in Betracht, etwa um eine monolithische Wabenstruktur zu erzielen. Bei FVK und Duroplasten kommt wird eine Klebung bevorzugt, bei Thermoplasten eine Klebung und/oder eine Schweißverbindung.

Die erfindungsgemäße Wabe eignet sich besonders für Leichtbauteile, insbesondere als verformbare Wabe für Leichtbauteile mit einer im Raum gekrümmten Oberfläche.

Weitere Anwendungsfälle liegen ebenfalls im Rahmen der Erfindung, etwa in Filtervorrichtungen bei denen ein große aktive Fläche und eine gute Verformbarkeit der die Fläche aufweisenden Struktur gewünscht ist.

Ein weiteres Anwendungsbeispiel sind sogenannte Crash-Absorber, insbesondere dreidimensionale geformte Bauteile zur Aufnahme von kinetischer bzw. mechanischer Energie (Engl. "3D crash absorber"), Knautschelemente, Stossdämpfer und dgl.

### Kurze Beschreibung der Figuren

Weitere Einzelheiten, Merkmale und Vorteile der Erfindung sind der nachfolgenden, ausführlicheren Beschreibung bevorzugter Ausführungsbeispiele anhand der beiliegenden Figuren zu entnehmen. Diese zeigen in schematischer und nicht maßstabsgetreuer Darstellung:
- FIG.1A:: eine schematische Draufsicht auf eine erfindungsgemäße Wabe eines ersten, besonders bevorzugten Ausführungsbeispiels;
- FIG.1B:: einen vergrößerten Teilbereich aus FIG.1A;
- FIG.1C:: ein schematisch dargestelltes Ablageschema im Herstellungsverfahren zur Herstellung einer Wabe gemäß FIG.1A-1B;
- FIG.2A:: eine schematische Draufsicht auf eine erfindungsgemäße Wabe eines zweiten Ausführungsbeispiels;
- FIG.2B:: einen vergrößerten Teilbereich aus FIG.2A;
- FIG.2C:: ein schematisch dargestelltes Ablageschema für eine Wabe gemäß FIG.2A-2B;
- FIG.3A:: eine schematische Draufsicht einer Variante des zweiten Ausführungsbeispiels;
- FIG.3B:: ein schematisch dargestelltes Ablageschema für eine Wabe gemäß FIG.3A;
- FIG.4A:: eine schematische Draufsicht auf eine erfindungsgemäße Wabe eines dritten Ausführungsbeispiels;
- FIG.4B:: ein schematisch dargestelltes Ablageschema für eine Wabe gemäß FIG.4A;
- FIG.5(a)-(h):: einen schematisierten Prozessablauf des bevorzugten Herstellungsverfahrens zur Herstellung einer Wabe;
- FIG.6(a)-(d):: beispielhafte fotografische Momentaufnahmen, welche die Entstehung einer erfindungsgemäßen Wabe aus Aluminiumfolie während der Expansion in W-Richtung (vgl. FIG.5(d)) veranschaulichen;
- FIG.7:: ein Foto einer erfindungsgemäßen Wabe aus Aluminiumfolie mit einer Geometrie nach FIG.1, rein beispielhaft in drei Dimensionen verformt, hier in etwa sphärisch;
- FIG.8(A)-(F):: aus dem Stand der Technik vorbekannte Wabengeometrien: Hexagonalwabe (A); verstärkte Hexagonalwabe (B); überexpandierte Hexagonalwabe (C); quadratische Wabe (D); unterexpandierte Hexagonalwabe (E) und sog. FLEX-CORE® Wabe (F).

### Beschreibung einer bevorzugten Ausführungsform

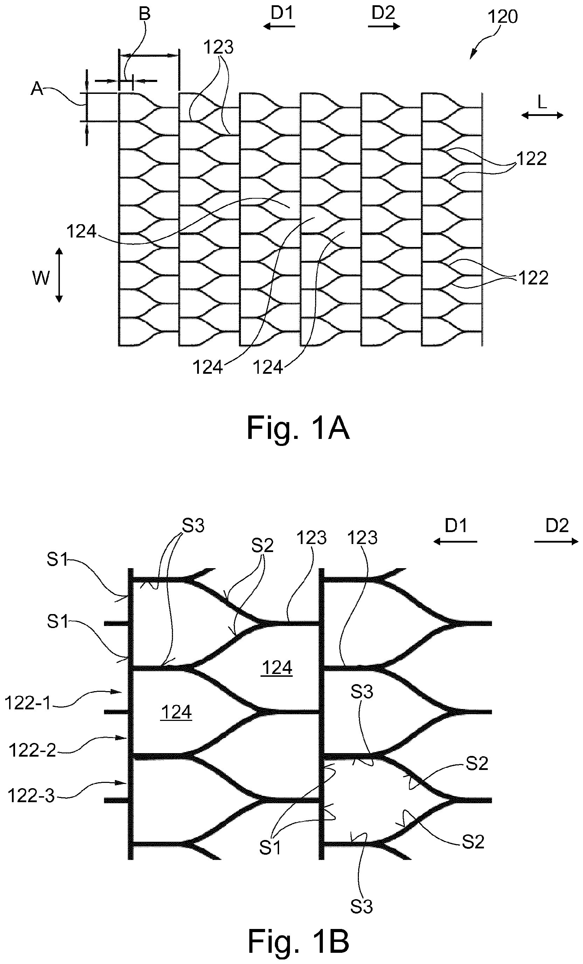

FIG.1A-1B zeigen einen Teilbereich einer verformbaren Wabe 120 in Draufsicht auf die L-/W-Ebene, d.h. die durch die L-Richtung (Längsrichtung) und die W-Richtung (Querrichtung) gebildete Ebene, welche der Ebene der FIG.1A entspricht.

Die Wabe besteht aus einer Vielzahl länglicher Bänder 122 (Engl. ribbons), welche grob betrachtet in L-Richtung verlaufen und sich mit der in L-Richtung und T-Richtung (Wabenstärke, d.h. senkrecht zu FIG.1A-1B) erstreckten Hauptfläche gegenüberliegen.

In der W-Richtung verbinden jeweils eine Vielzahl zwischen zwei gegenüberliegenden Bändern 122 vorgesehene Kleberstreifen 123 die Bänder 122 zu einer zusammenhängenden wabenartigen Struktur welche die Wabe 120 bildet. Wie weiter unten näher erläutert, verbinden die streifenförmig in T-Richtung durchgehend angeordneten Kleberstreifen 123 jeweils benachbarte Bänder 122 abschnittsweise miteinander. Die Kleberstreifen 123 sind hierzu in regelmäßigen Abständen entlang der L-Richtung eines Bands 122, d.h. mit periodischem Mittenabstand I zwischen benachbarten Kleberstreifen 123 angeordnet.

Zwischen den schlängelnd bzw. mäanderartig in L-Richtung verlaufenden Bändern 122 bilden wabenartige Zellen 124 die gewichtssparend wirkenden Hohlräume der Wabe 120.

Wie aus FIG.1A-1B hervorgeht ist, bezogen auf drei aufeinander folgende Bänder, z.B. 122-1, 122-2, 122-3 in FIG.1B, ein Versatz der Verbindungsbereiche 123A, welche das erste und zweite Band 122-1, 122-2 verbinden, zu den Verbindungsbereichen 123B, welche das zweite und dritte Band 122-2, 122-3 verbinden, zu der einen Seite D1 der L-Richtung deutlich geringer, als zur anderen Seite D2. Hieraus entsteht, wie FIG.1A-1B zeigen, im Querschnitt in der L/W-Ebene, eine Form der Zellen 124 in Art eines unregelmäßigen Polygons. Im hier gezeigten Beispiel haben alle Zellen 124 eine identische Grundform ähnlich dem Aufriss eines Sektkelches. Die Wabe 120 ähnelt im Gatter- bzw. Gittermuster einem Fischschuppenmuster. Im Querschnitt parallel zur L/W-Ebene haben die Zellen 124 Wabenstege umfassend mindestens einen, dem größeren Versatz entsprechenden, längeren Schenkel S2 und zumindest einem, dem geringeren Versatz entsprechenden, kürzeren Schenkel S1.

Im hier gezeigten Ausführungsbeispiel sind die Zellen 124 im Querschnitt, für sich betrachtet, technisch spiegelsymmetrisch zur L-Richtung und, von einer Reihe zur nächsten Reihe betrachtet, in Bezug auf die W-Richtung spiegelverkehrt angeordnet. Somit hat die Wabe 120 insgesamt ein regelmäßiges Muster mit Waben 124, welche im Wesentlichen den gleichen kelchförmigen Grundriss bzw. Querschnitt aufweisen. Jede Zelle 124 hat in diesem Beispiel zwei kurze Schenkel S1, zwei lange Schenkel S2 und zwei weitere Schenkel S3. An den Schenkeln S3 sind die Kleberstreifen 123 vorgesehen, die Schenkel S3 weisen demnach die Länge der Breite B der Kleberstreifen 123 auf, welche etwa der Abmessung des kürzeren Schenkels S1 entspricht.

Die bei dieser Geometrie vorliegenden, langen Wabenstege bzw. Schenkel S2 verlaufen geschwungen tangensförmig und leisten durch ihre überschüssige Länge den entscheidenden Beitrag zur Verformbarkeit der Wabe 120. FIG.1A-1B zeigen Wabe 120 in einem nominal vollständig in W-Richtung expandierten Zustand, wodurch maximale Gewichtseinsparung realisiert wird. In diesem Fall beträgt die Abmessung der Zellen 123 in W-Richtung genau das Doppelte der Länge des kurzen Schenkels S1. Weiter verbesserte synklastische Eigenschaften ergeben sich, wenn die kurzen Schenkel S1 nicht in W-Richtung fluchten, sondern mit stumpfem Winkel leicht angewinkelt sind, d.h. der Grundriss ein etwa rautenförmiges, unregelmäßiges Polygon darstellt. Dies kann durch eine weniger ausgeprägte Expansion bzw. Aufweitung A ohne Zusatzaufwand erreicht werden.

In einem solchem, ebenfalls bevorzugten Ausführungsbeispiel beträgt die Aufweitung bzw. Abmessung der Zellen 123 in W-Richtung spürbar weniger als das Doppelte der Länge des kurzen Schenkels S2, d.h. der Abstand aufeinander folgender Verbindungsbereiche 123A, 123B in W-Richtung ist kleiner als die Abmessung des geringeren Versatzes zur einen Seite D1 der L-Richtung.

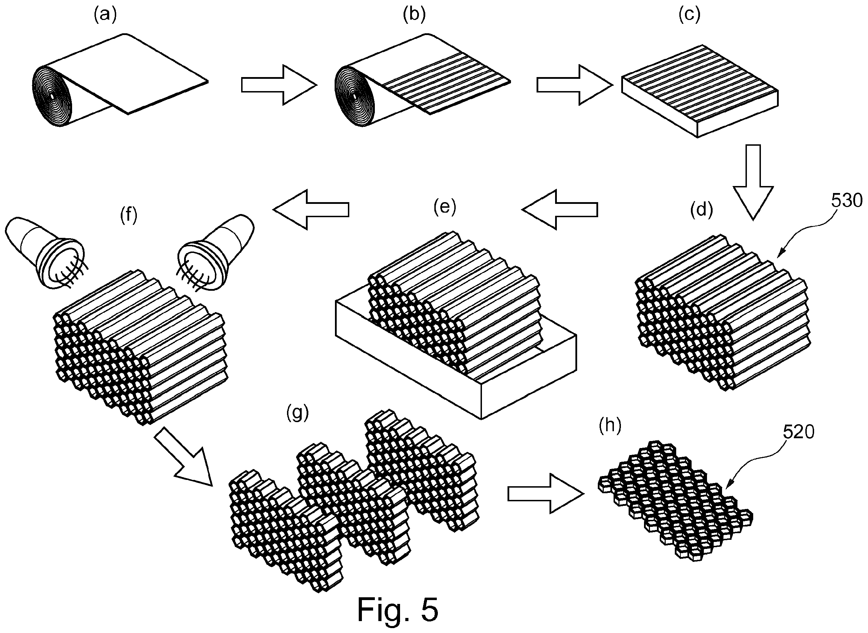

FIG.1C veranschaulicht ein Ablageschema für die Herstellung einer erfindungsgemäßen Wabe, z.B. nach FIG.1A-1B. Die Herstellung erfolgt größtenteils in an sich bekannter Weise nach dem Expansionsverfahren (vgl. FIG.5), wie z.B. bei Hexagonalwabe. Hierzu illustriert FIG.1C lediglich den anfänglichen Schritt des stapelartigen Ablegens einzelner Bögen 125 aus dünnem blatt- oder folienartigem Material. Auf den Bögen 125 sind in bekannter Weise, in periodischem Mittenabstand I in T-Richtung geradlinig verlaufend, die Kleberstreifen 123 einseitig aufgedruckt. Die Bögen 125 sind in FIG.1C nur zur Veranschaulichung in T-Richtung versetzt gezeigt.

Ein entscheidender Unterschied zum Stand der Technik ist jedoch der tatsächlich vorgesehene Versatz in L-Richtung, nämlich, dass beim Ablageschema der Bögen 125, bezogen auf drei aufeinander folgende Bögen 125-1, 125-2, 25-3, ein vorbestimmter Versatz der Verbindungsbereiche 123 zwischen erstem und zweitem Bogen 125-1, 125-2 zu den Verbindungsbereichen zwischen zweitem und drittem Bogen 125-2, 125-3 zu einer Seite D1 der L-Richtung deutlich geringer ist, als zur anderen Seite D2. Der dritte Bogen 125-3 ist hierbei wieder ohne Versatz genau bündig zum ersten Bogen 125-1 abgelegt. Zur Veranschaulichung sind in FIG.1C nur drei Bögen 125 gezeigt. Es versteht sich, dass in der Praxis eine Vielzahl von einigen Zehn oder Hundert Bögen gestapelt und verklebt wird.

So entsteht ohne sonstige wesentliche Änderung im bewährten Verfahrensablauf nach dem Expansions-Prinzip (vgl. FIG.5) eine Wabe 120 mit einer Form ähnlich FIG.1A-1B. Auch ein doppelter Versatz (abwechselnd in die eine und andere Richtung), nur ein bereichsweise innerhalb der Wabe 20 vorgesehener Versatz, oder in W-Richtung variierende Beträge des ungleichen, außermittigen Versatzes liegen im Rahmen der Erfindung, wie unten näher beschrieben.

Ohne Einschränkung und nur zur besseren Veranschaulichung, kann die Wabe 120 gemäß FIG.1A-1B z.B. folgende Daten aufweisen:

### Beispiel 1:

| | |
|---|---|
| A: | ca. 4,6mm |
| B: | 3mm |
| I: | 16mm |
| S1': | 5,33mm |
| S2': | 10,66mm |
| Länge S1: | ca. 2,3mm (≈ S1'-B) |
| Länge S2: | ca. 7,6mm (≈ S.2'-B) |
| T: | 5 bis 25mm |

Material der Bögen/Bänder: Aramid-Faser-Papier (nach Verformen auszuhärten), mit Stärke 0.08mm

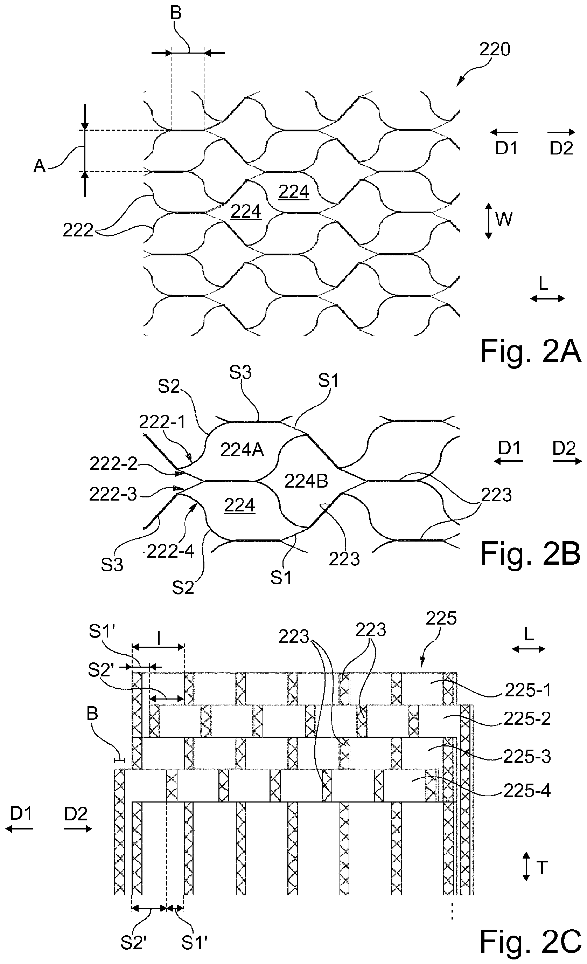

FIG.2A-2B zeigen schematisiert ein zweites Ausführungsbeispiel einer verformbaren Wabe 220 ebenfalls in einem Teilbereich der Draufsicht auf die L-/W-Ebene, welche der Ebene der FIG.2A entspricht. Entsprechende oder identische Teile bzw. Merkmale im Vergleich zu FIG.1A-1B sind entsprechenden Bezugszeichen versehen. Es werden zur Vermeidung von Wiederholung nur relevante Unterschiede und Gemeinsamkeiten näher erläutert.

Wie bei FIG.1A-1B hat auch in FIG.2A-2B hier jede Wabenzelle 224 zwischen den schlängelnd und grob in L-Richtung verlaufenden Bändern 222 jeweils eine zur T/W-Ebene asymmetrische Querschnittsform in der L-/W-Ebene. Die Wabenzellen 224 weisen in FIG.2A-2B jedoch zwei verschiedene Grundformen 224A, 224B auf, welche sich regelmäßig über die Fläche wiederholen. Die eine Grundform 224A wiederholt sich in W-Richtung jeweils zur L-/T-Ebene spiegelverkehrt, die andere Grundform 224B jedoch zur T-/W-Ebene spiegelverkehrt.

Diese Grundformen 224A, 224B der Wabenzellen 224 ergeben sich aus dem Ablageschema nach FIG.2C. Hierbei wird jeweils abwechselnd bzw. alternierend jeweils zur ersten Seite D1 und dann zur zweiten Seite D2 und umgekehrt, ein vorbestimmter außermittiger Versatz vorgesehen. Dementsprechend sind, in einer beliebigen Bandabfolge, die Verbindungsbereiche bzw. Klebelinien 223 zwischen dem ersten Band 222-1 und dem zweiten Band 222-2 zu den Verbindungsbereichen zwischen zweitem Band 222-2 und drittem Band 222-3 in die eine Richtung D1 bzw. D2 versetzt, die Verbindungsbereiche 223 zischen dem zweiten Band 222-2 und dritten Band 222-3 sind jedoch in die entgegengesetzte Richtung D2 bzw. D1 versetzt zu den Verbindungsbereichen 223 zischen dem dritten Band 222-3 und dem vierten Band 222-4. Zudem wird der vordefinierte außermittige Versatz abwechselnd aussetzend wiederholt, d.h. dass die Verbindungsbereiche 223, bezogen auf vier in Querrichtung (W) aufeinander folgende Bänder 222-1... 222-4, jeweils zwischen erstem und zweiten Band 222-1, 222-2 sowie zwischen drittem und viertem Band 222-3, 222-4 unversetzt d.h. auf im Wesentlichen gleicher Höhe in L-Richtung liegen. Die Verbindungsbereiche 223 bilden auch hier den dritten Schenkel S3, welcher ggf. schräg zur L-Richtung liegen kann (wie in FIG.2A-2B gezeigt).

Durch einen geeigneten größeren Versatz S2' im Vergleich zum geringeren Versatz S1' entstehen auch bei dieser Anordnung längere Schenkel S2 als Wabenstege, welche in FIG.2A-2B zur besseren Veranschaulicht mit einem im Vergleich zur praktischen Ausführung stärker geschweiften Verlauf abgebildet sind. Die kürzeren Schenkel S1 können auch in der Ausführungsform nach FIG.2A-2B eine Abmessung in Verlaufrichtung der Bänder 222 von weniger als 40% bspw. etwa 25% der entsprechenden Abmessung der längeren Schenkel S2 aufweisen. Der geringere Versatz S1' ist hierbei abwechselnd zur ersten Seite D1 und dann zur zweiten Seite D2 hin vorgesehen und umgekehrt.

FIG.2C zeigt das Ablageschema für die Ausführungsform nach FIG.2A-2B. Hierbei wird in der Abfolge der Bögen 225-1... 225-4 ausgehend von einem Bogen 225-1 der nächste Bogen 225-2 in mit geringem Versatz S1' in die eine Richtung D1, der übernächste Bogen 225-3 nicht zum ersten Bogen versetzt und der drittnächste Bogen 225-4 schließlich mit gleichem Versatz S1' aber in die andere Richtung D2 versetzt abgelegt. Mit diesem Ablegeschema entstehen die Grundformen der Waben 224 aus FIG.2A-2B nach teilweise oder vollständiger Expansion, sofern das Verhältnis des geringeren Versatzes S1' zur Breite B der Verbindungsbereiche spürbar grösser 1 beträgt. Bevorzugt liegt dieses Verhältnis im Bereich von: 1,5 ≤ S1'/B ≤ 2,5, und beträgt bevorzugt etwa 2. Die Abmessung des größeren Versatzes S2' in Verlaufrichtung entspricht der Differenz zwischen Abmessung des Mittenabstands I und Abmessung des geringeren Versatzes S1', woraus entsprechende Verhältnisse zwischen den Größen B, I, S1' und S2' resultieren. In bevorzugter Ausführung beträgt der Mittenabstand I ein ganzzahliges Vielfaches der Breite B, vorzugsweise mindestens das Vierfache.

Ohne Einschränkung und nur zur besseren Veranschaulichung, kann die Wabe 220 gemäß FIG.2A-2B z.B. folgende Daten aufweisen:

### Beispiel 2:

| | |
|---|---|
| A: | 3mm |
| B: | 3mm |
| I: | 12mm |
| S1': | 5,33mm |
| S2': | 10,66mm |

| | |
|---|---|
| Länge S1: | ca. 2,3mm (≈ S1'-B) |
| Länge S2: | ca. 7,6mm (≈ S.2'-B) |

Material der Bögen/Bänder: Aramid-Faser-Papier (nach Verformen auszuhärten), mit Stärke 0.08mm

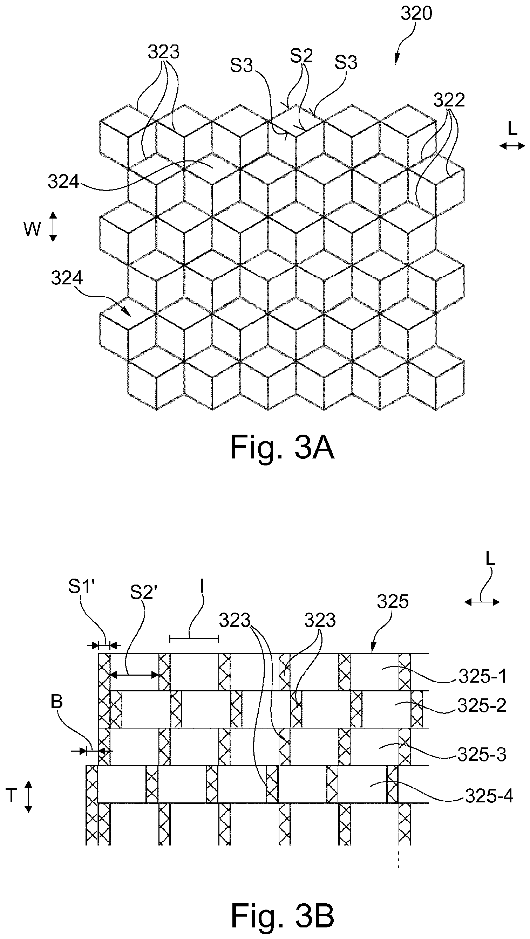

FIG.3A-3B zeigen eine Abwandlung bzw. einen Sonderfall der Ausführungsform nach FIG.2A-2B mit ebenfalls abwechselnd aussetzendem und richtungsalternierendem Versatz S1' bzw. S2'. Die charakteristische Form diese Wabe 320 nach FIG.3A-3B wird dadurch erzielt, dass die Länge der kürzeren Schenkel S1 verschwindend gering ist, bzw. technisch auf null reduziert wird, wie FIG.3B zeigt. Dies wird erreicht, wenn z.B. im Ablageschema (FIG.3B) oder beim Schweißprozess der geringere Versatz S1' bis auf unvermeidbare Toleranz genau der Breite B der Verbindungsbereiche 323, z.B. Kleberstreifen oder Schweißnähte, entspricht. Folglich entspricht der größere Versatz S2' genau dem regelmäßigen Mittenabstand bzw. Intervall I der Verbindungsbereiche 323. Bei vollständiger Expansion, insbesondere im Fall von Metallfolien, wie z.B. Aluminiumfolie, als Material für die Bänder 322, haben die Waben 324 eine im Wesentlichen durchgehend identische viereckige Grundform in der L/W-Ebene. Drei aneinandergrenzende Waben 324 bilden in diesem Fall jeweils (in Dreiergruppe mit drei jeweils um 120° um die T-Achse rotierten Grundformen) regelmäßige Sechsecke, wie aus FIG.3A ersichtlich. Anders als in FIG.1A-2A haben in FIG.3A der überwiegende Anteil bzw. alle Waben 324 im Querschnitt in der L/W-Ebene, eine Form in der Art eines Polygons, hier etwa eines regelmäßigen Vierecks bzw. einer Raute (bei S2'-B=B) oder eines Parallelogramms (bei S2'-B≠B). Die innerhalb der Wabe 320 im Wesentlichen identische Grundform ist jedoch, anders als beim Stand der Technik (FIG.8), überwiegend, in Fig.3A zu einem Anteil von 2/3, nicht symmetrisch zur T/W-Ebene angeordnet. Die Ausführungsform nach FIG.3A-3B zeigt gute Festigkeitswerte.

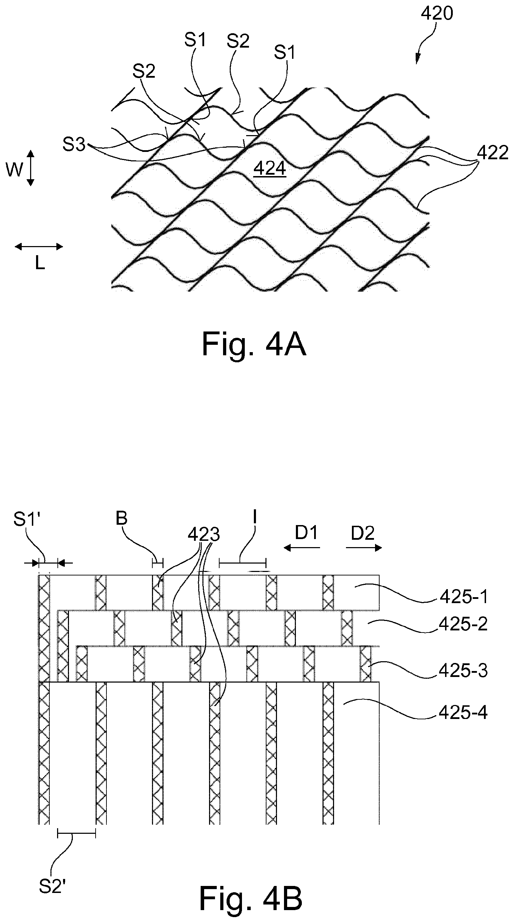

FIG.4A-4B zeigen schließlich eine weitere Abwandlung der Erfindung. Bei der Wabe 420 verlaufen die Bänder 422 in etwa wellenförmig und leicht schräg zur L-Richtung, wie FIG.4A zeigt. Dies wird mit einem Ablageschema gemäß FIG.4B erreicht bei dem in W-Richtung aufeinanderfolgende Verbindungsbereiche 423 stets relativ zueinander und zur gleichen Seite, z.B. D2, versetzt sind. Hierbei wird der geringere Versatz S1' bevorzugt so gewählt, dass S1' Teiler des Mittenabstands I ist. Hierdurch kann nach einer Abfolge von N=B/S1' Bögen 425-1... 425-3, der nächste Bogen 425-4 wieder parallel zum anfänglichen Bogen abgelegt werden, um den Materialaufwand zu reduzieren und die Ablage zu erleichtern. Ein entsprechendes Ablageschema mit B/S1'=3 zeigt FIG.4B.

Die wellenartige Grundform der Waben 424 in FIG.4A mit jeweils zwei kurzen, etwa geraden Schenkeln S1, entsprechend dem geringeren Versatz S1', zwei weit geschweiften längeren Schenkeln S2, entsprechend dem größeren Versatz S2', und etwa geradlinigen dritten Schenkeln S3, entsprechend der Breite B der Verbindungsbereiche 423, ist durchgehend identisch und regelmäßig wiederholend angeordnet.

Die Wabe 420 der Ausführungsform nach FIG.4A-4B ist mit relativ geringem antiklastischem Verhalten für viele Anwendungen geeignet verformbar und zeigt, bei vergleichbarer Dimensionierung und Materialwahl typisch bessere Druck- und Schubfestigkeitswerte, als z.B. die Wabe nach FIG.1A.

FIG.5 veranschaulicht die verschiedenen Stufen des bevorzugten Expansionsverfahrens zur Wabenherstellung. In Schritt (a) wird eine Rolle mit blatt- oder folienartigem Material bereitgestellt, auf welches in Schritt (b) in regelmäßigen bzw. periodischen Abständen parallele Kleberlinien bzw. Kleberstreifen senkrecht über die gesamte Breite aufgedruckt werden. In Schritt (c) werden von der Rolle Bögen mit identischem Format zugeschnitten, in vorbestimmter Weise aufeinander abgelegt und anschließend wird der nach dem gewünschten Ablageschema abgelegte Stapel aus Bögen durch An- oder Aushärten der Kleberstreifen, bspw. unter Druck- und/oder Temperatureinwirkung in einer Presse, zu einem zusammenhängenden Block verarbeitet. Anstelle einer Klebung in den Schritten (b) und (c) können, je nach Material, die Verbindungsbereiche z.B. durch Schweißen nach einem geeigneten Schema erzeugt werden. In Schritt (d) erfolgt in an sich bekannter Weise die Expansion in W-Richtung so, dass ein Wabenblock 530 mit Wabenzellen entsteht (FIG.5 zeigt die bekannte Hexagonalform). Der expandierte Block wird anschließend stabilisiert, z.B. durch Temperatureinwirkung in einem Ofen.

Der Block wird dann im (optionalen) Schritt (e) gleichmäßig mit Kunstharz getränkt. Im (optionalen) Schritt (f) folgt durch geeignete Mittel ein An- oder Aushärten des Harzes, sodass z.B. ein FVK entsteht. Anschließend wird der hinsichtlich der Wabenform formstabile Block in Schritt (g) in einer Schneide- oder Sägevorrichtung durch Trennen in der L/W-Ebene, in einzelne Wabenscheiben zerlegt bzw. aufgetrennt. Anschließend steht in Schritt (h) die Wabe 520 mit gewünschter Geometrie bereit.

Erfindungsgemäße Wabengeometrien lassen sich in besonders einfachere Weise dadurch realisieren, dass in Schritt (c) nach einem geeigneten Schema, bei Klebeverbindungen z.B. einem Ablageschema gemäß FIG.1C, FIG.2C, FIG.3B oder FIG.4B oder z.B. nach einem deckungsgleichen Muster von Schweißnähten, ein vorbestimmter außermittiger Versatz der Verbindungsbereiche erzeugt wird. Es sind ansonsten keine aufwendigen Anpassungen des bewährten Expansionsverfahrens erforderlich.

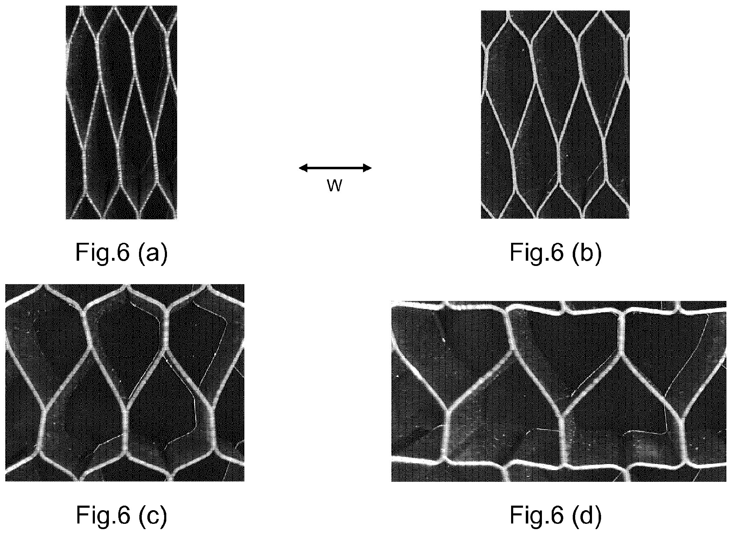

FIG.6(a)-(d) zeigen unterschiedliche Expansionsstufen während der Expansion der Waben in W-Richtung. Hierbei sind die unterschiedlich langen Schenkel der Wabengeometrie einer Zelle und die Entwicklung der Wabengeometrie hin zu einer Geometrie nach FIG.1(a) anhand von Fotos eines Prototypen veranschaulicht.

FIG.7 zeigt rein beispielhaft und ohne Beschränkung der Erfindung eine mögliche Formgebung mit Wabe aus Metallfolie, z.B. Aluminiumfolie, welche eingangs bzw. im Grundzustand die Geometrie nach Fig.1(a) aufweist.

### Bezugszeichenliste

FIG.1-4:
   A Aufweitung
   B Breite Kleberstreifen
   I Mittenabstand
   L L-Richtung (Längsrichtung)
   S1, S2, S3 Schenkel bzw. Wabenstege
   S1' geringerer Versatz
   S2' größerer Versatz
   D1, D2 erste bzw. zweite Seitenrichtung
   T T-Richtung (Wabenstärke bzw. -dicke)
   W W-Richtung (Querrichtung)
FIG.1A-1C:
   120 verformbare Wabe
   122 Band
   122-1, 122-2, 122-3 Folge von Bändern
   123 Kleberstreifen
   124 Wabenzelle
   125 Bogen
   125-1, 125-2, 125-3 Folge von Bögen
FIG.2A-2C:
   220 verformbare Wabe
   222 Band
   222-1... 222-4 Folge von Bändern
   223 Kleberstreifen
   224 Wabenzelle
   224A, 224B Grundformen
   225 Bogen
   225-1... 225-4 Folge von Bögen
FIG.3A-3B:
   320 Wabe
   322 Band
   323 Schweißnähte / Kleberstreifen
   324 Wabenzelle
   325 Bogen
   325-1... 325-4 Folge von Bögen
FIG.4A-4B:
   420 Wabe
   422 Band
   422-1... 422-4 Folge von Bändern
   423 Kleberstreifen
   424 Wabenzelle
   425 Bogen
   425-1... 425-4 Folge von Bögen
FIG.5:
   (a) bis (h): Prozessabschnitte
   520 Wabe
   530 Wabenblock
FIG.6 (a) bis (d): Momentaufnahmen verschiedener Expansionsstufen
FIG.7: beispielhafte Raumgeometrie einer Wabe (Foto)
FIG.8
   (A) bis (F): vorbekannte Wabengeometrien

## Patentansprüche

1. Wabe (120... 420) für Leichtbauteile, insbesondere verformbare Wabe z.B. für Leichtbauteile mit einer gekrümmten Oberfläche, umfassend
längliche Bänder (122... 422), welche aus, blatt- oder folienartigem Material hergestellt sind, eine Längsrichtung (L) aufweisen und in Querrichtung (W) quer zur Längsrichtung (L) flächig gegenüberliegend angeordnet sind;
eine Vielzahl, jeweils zwischen zwei gegenüberliegenden Bändern vorgesehene Verbindungsbereiche (123... 423), insbesondere Klebestreifen, welche die Bänder in Querrichtung (W) abschnittsweise stoffschlüssig miteinander verbinden und in regelmäßigen Abständen angeordnet sind, nämlich mit periodischem und zwischen allen Verbindungsbereichen identischem Mittenabstand (I) entlang der Längsrichtung (L) eines Bands, und wabenartige Zellen (124... 424), welche Hohlräume zwischen den Bändern bilden; **dadurch gekennzeichnet,**
**dass**, bezogen auf drei aufeinander folgende Bänder (122... 422), ein Versatz (S1') der Verbindungsbereiche zwischen erstem und zweitem Band (122-1, 122-2... 422-1, 422-2) zu den Verbindungsbereichen zwischen zweitem und drittem Band (122-2, 122-3... 422-2, 422-3) zu einer ersten Seite (D1) der Längsrichtung (L) deutlich geringer ist, als zur anderen, zweiten Seite (D2) der Längsrichtung (L); und
**dass** zumindest ein Teil der Zellen (24) im Querschnitt in der L/W-Ebene, eine Form aufweisen, mit zumindest einem, dem größeren Versatz entsprechenden, längeren Schenkel (S2) und vorzugsweise zumindest einem, dem geringeren Versatz entsprechenden, kürzeren Schenkel (S1).

2. Wabe nach Anspruch 1, **dadurch gekennzeichnet, dass** jeder außermittige, geringere Versatz (Sl') jeweils stets zur ersten Seite (D1) hin vorgesehen ist.

3. Wabe nach Anspruch 1, **dadurch gekennzeichnet, dass** jeweils abwechselnd zur ersten Seite (D1) und zur zweiten Seite (D2) ein außermittiger, geringerer Versatz (Sl') vorgesehen ist.

4. Wabe nach einem der Ansprüche 1 bis 3, dass der außermittige Versatz abwechselnd aussetzend wiederholt ist, wobei die Verbindungsbereiche, bezogen auf vier in Querrichtung (W) aufeinander folgende Bänder, jeweils zwischen erstem und zweiten Band (222-1, 222-2) sowie zwischen drittem und viertem Band unversetzt (222-3, 222-4) liegen, wobei vorzugsweise in jeder Abfolge von vier Bändern, lediglich die Verbindungsbereiche (123... 423) zwischen erstem und zweitem Band (122-1, 122-2... 422-1, 422-2) zu den Verbindungsbereichen zwischen zweitem und drittem Band (122-2, 122-3... 422-2, 422-3) außermittig versetzt sind.

5. Wabe nach Anspruch 1, 2 oder 3, wobei in Querrichtung (W) aufeinander folgende Verbindungsbereiche (123... 423) stets zueinander außermittig versetzt sind.

6. Wabe nach einem der Ansprüche 1 bis 5, **dadurch gekennzeichnet,**
- **dass** der Versatz derart häufig und regelmäßig vorgesehen ist, dass zumindest ein überwiegender Anteil der wabenartigen Zellen (124... 324) im Querschnitt in der L/W-Ebene, die im wesentlichen identische Grundform mit dem zumindest einen längeren Schenkel (S2) und vorzugsweise dem zumindest einen kürzeren Schenkel (S1) aufweisen; oder
- **dass** der außermittige Versatz derart regelmäßig vorgesehen ist, dass zumindest ein überwiegender Anteil der wabenartigen Zellen (124... 324) im Querschnitt in der L/W-Ebene, eine Form in der Art eines unregelmäßigen Polygons aufweisen.

7. Wabe nach einem der vorstehenden Ansprüche, **dadurch gekennzeichnet, dass**
- das Verhältnis des geringeren Versatzes (Sl') zum größeren Versatz (S2') S1'/S2' ≤ 0,45, insbesondere ≤ 0,4 beträgt; und/oder
- das Verhältnis des geringeren Versatzes (Sl') zum Mittenabstand (I) Sl'/I ≤ 2/5, insbesondere Sl'/I ≤ 1/3 beträgt.

8. Wabe nach einem der vorstehenden Ansprüche, wobei die Verbindungsbereiche streifenartig senkrecht zur Längsrichtung (L) in Richtung der Wabenstärke (T) verlaufen und eine durchgehend identische Breite (B) in Längsrichtung (L) aufweisen, wobei vorzugsweise vorgesehen ist, dass der geringere Versatz (Sl') größer ist, als die Breite (B) der Verbindungsbereiche, insbesondere mindestens um einen Faktor 1,5 größer, wobei vorzugsweise die Breite (B) der Verbindungsbereiche bezogen auf den Mittenabstand (I) im Bereich 1/8 ≤ B/I ≤ 1/3, vorzugsweise 1/6 ≤ B/I ≤ 1/4 beträgt.

9. Wabe nach Anspruch 8, **dadurch gekennzeichnet, dass**
- das Verhältnis des größeren Versatzes (S2') zur Breite (B) der Verbindungsbereiche im Bereich 2 ≤ S2'/B ≤ 4, vorzugsweise im Bereich 2,25 < S2'/B < 3,75 liegt; und/oder
- das Verhältnis des geringeren Versatzes (Sl') zur Breite (B) der Verbindungsbereiche im Bereich 1,5 ≤ S1'/B ≤ 2,5 liegt, wobei der geringere Versatz vorzugsweise etwa das Doppelte dieser Breite (B) beträgt.

10. Wabe nach einem der vorstehenden Ansprüche, **dadurch gekennzeichnet, dass** der Querschnitt in der Art eines unregelmäßigen Sechsecks sechs Schenkel (S1, S2, S3) aufweist und im Wesentlichen kelchförmig ist;
wobei vorzugsweise der Abstand aufeinander folgender Verbindungsbereiche in Querrichtung (W) kleiner ist, als die Abmessung des geringeren Versatzes (Sl') in Längsrichtung (L).

11. Wabe nach einem der vorstehenden Ansprüche 1 bis 10, **dadurch gekennzeichnet,**
**dass** die Bänder aus Kunststoff, insbesondere aus Faserverbundkunststoff, aus einem Thermoplast, einem Duroplast oder ggf. einer Kombination hieraus, hergestellt sind und der längere Schenkel (S2) vorzugsweise gekrümmt verläuft, insbesondere S-kurvenförmig bzw. tangensartig; oder
**dass** die Bänder aus Metallfolie, insbesondere Aluminiumfolie hergestellt sind und der längere Schenkel (S2) vorzugsweise technisch geradlinig verläuft.

12. Wabe nach einem der vorstehenden Ansprüche, **dadurch gekennzeichnet,**
**dass** die Wabenstärke (T) betragsmäßig weniger als das Sechsfache, vorzugsweise weniger als das Vierfache des längeren Schenkels (S2) beträgt; und/oder
**dass** der geringere Versatz (Sl') betragsmäßig um ein Vielfaches, insbesondere mindestens das Zehnfache größer ist, als die stärkste verwendete Materialstärke der Bänder.

13. Sandwichbauteil umfassend einen Kern aus Wabe, dessen Waben zumindest einseitig durch eine durch Kleben mit der Wabe verbundene Deckschicht verschlossen sind, wobei die Deckschicht vorzugsweise aus Faserverbundmaterial, aus ein oder mehrlagigem Folienmaterial oder monolithisch aus Metall hergestellt ist, **dadurch gekennzeichnet, dass** der Kern aus Wabe gemäß einem der Ansprüche 1 bis 12 hergestellt ist.

14. Wabenblock zur Herstellung von Wabe, insbesondere verformbare Wabe z.B. für Leichtbauteile mit einer gekrümmten Oberfläche, umfassend
Bögen (125... 425) aus blatt- oder folienartigem Material, welche eine Längsrichtung (L) aufweisen und in Querrichtung (W) quer zur Längsrichtung (L) flächig gegenüberliegend angeordnet sind;
eine Vielzahl, jeweils zwischen zwei gegenüberliegenden Bögen vorgesehene Verbindungsbereiche (123... 423), insbesondere Klebestreifen, welche die Bögen in Querrichtung (W) abschnittsweise stoffschlüssig miteinander verbinden und in regelmäßigen Abständen angeordnet sind, nämlich mit periodischem und zwischen allen Verbindungsbereichen identischem Mittenabstand (I) entlang der Längsrichtung (L) eines Bogens;
**dadurch gekennzeichnet,**
**dass**, bezogen auf drei aufeinander folgende Bögen (122... 422), ein Versatz der Verbindungsbereiche zwischen erstem und zweitem Bogen (125-1, 125-2... 425-1, 425-2) zu den Verbindungsbereichen zwischen zweitem und drittem Bogen (125-2, 125-3... 425-2, 425-3) zu einer ersten Seite (D1) der Längsrichtung (L) deutlich geringer ist, als zur anderen, zweiten Seite (D2) der Längsrichtung (L);
sodass nach einem Expandieren des Blocks zumindest ein Teil der Zellen (24) im Querschnitt in der L/W-Ebene, eine Form aufweisen, mit zumindest einem, dem größeren Versatz entsprechenden, längeren Schenkel (S2) und vorzugsweise zumindest einem, dem geringeren Versatz entsprechenden, kürzeren Schenkel (S1).

15. Verfahren zur Herstellung von Wabe, insbesondere von verformbarer Wabe, umfassend:
stapelartiges Ablegen von Bögen aus dünnem blatt- oder folienartigem Material, wobei die Bögen in einer Querrichtung (W) quer zu einer Längsrichtung (L) der Bögen flächig aufeinander gestapelt werden;
stoffschlüssiges Verbinden der Bögen in Querrichtung (W) zu einem Block durch eine Vielzahl Verbindungsbereiche, welche die Bögen in Querrichtung (W) abschnittsweise stoffschlüssig miteinander verbinden und in regelmäßigen Abständen angeordnet sind, nämlich mit periodischem und zwischen allen Verbindungsbereichen identischem Mittenabstand (I) entlang der Längsrichtung (L) eines Bogens, und insbesondere als einseitig auf die Bögen aufgedruckte Kleberstreifen ausgeführt sind;
Expandieren des Blocks in der Querrichtung um wabenartige Zellen mit Hohlräumen zwischen den Bögen zu bilden;
Trennen des Blocks in mehrere einzelne Waben, insbesondere durch Schneiden im Wesentlichen entlang Trennebenen parallel zur L-/W-Ebene; **dadurch gekennzeichnet, dass** bezogen auf drei aufeinander folgende Bögen, ein Versatz der Verbindungsbereiche zwischen erstem und zweitem Bogen zu den Verbindungsbereichen zwischen zweitem und drittem Bogen zu einer ersten Seite (D1) der Längsrichtung (L) deutlich geringer ist, als zur anderen, zweiten Seite (D2) der Längsrichtung (L); sodass nach dem Expandieren zumindest ein Teil der Zellen (24) im Querschnitt in der L/W-Ebene, eine Form aufweisen, mit zumindest einem, dem größeren Versatz entsprechenden, längeren Schenkel (S2) und vorzugsweise zumindest einem, dem geringeren Versatz entsprechenden, kürzeren Schenkel (S1).

16. Verfahren nach Anspruch 15, **dadurch gekennzeichnet, dass** beim stapelartigen Ablegen oder beim stoffschlüssigen Verbinden ein Schema mit dem außermittigen Versatz der Verbindungsbereiche zyklisch wiederholt wird.

17. Verfahren nach Anspruch 15, **dadurch gekennzeichnet, dass**
- beim stapelartigen Ablegen oder beim stoffschlüssigen Verbinden ein Schema zyklisch wiederholt wird, in welchem der außermittige Versatz der Verbindungsbereiche stets zur ersten Seite (D1) geringer ist; oder
- dass beim stapelartigen Ablegen oder beim stoffschlüssigen Verbinden ein Schema zyklisch wiederholt wird, in welchem der außermittige Versatz der Verbindungsbereiche abwechselnd zur ersten Seite (D1) und zur zweiten Seite (D2) geringer ist; wobei insbesondere beim stapelartigen Ablegen oder beim stoffschlüssigen Verbinden ein Schema zyklisch wiederholt wird, in welchem der außermittige Versatz abwechselnd aussetzend wiederholt ist, wobei die Verbindungsbereiche, bezogen auf vier in Querrichtung (W) aufeinander folgende Bögen, jeweils zwischen erstem und zweiten Bogen sowie zwischen drittem und viertem Bogen unversetzt liegen.

## Claims

1. A honeycomb (120... 420) for lightweight components, in particular a deformable honeycomb for example for lightweight components having a curved surface, including:
elongate ribbons (122... 422) which are made from sheet-like or film-like material, have a longitudinal direction (L) and are arranged in areal opposite relationship in the transverse direction (W) transversely relative to the longitudinal direction (L), and
a plurality of connecting regions (123; 423), in particular adhesive strips, which are respectively provided between two mutually opposite ribbons and which connect the ribbons together in portion-wise manner in firmly bonded relationship in the transverse direction (W) and which are arranged at regular spacings, namely with a periodic center spacing (I) which is identical between all connecting regions along the longitudinal direction (L) of a ribbon and honeycomb-cells (124... 424) forming cavities between the ribbons, **characterised in that**
in relation to three successive ribbons (122... 422) a displacement (Sl') of the connecting regions between first and second ribbons (122-1, 122-2... 422-1, 422-2) relative to the connecting regions between second and third ribbons (122-2, 122-3... 422-2, 422-3) towards a first side (D1) of the longitudinal direction (L) is markedly lesser than towards the other second side (D2) of the longitudinal direction (L); and
at least a part of the cells (24) in cross-section in the L/W plane are of a form having at least one longer limb (S2) corresponding to the greater displacement and preferably at least one shorter limb (S1) corresponding to the lesser displacement.

2. A honeycomb as set forth in claim 1 **characterised in that** each eccentric lesser displacement (Sl') is respectively always provided towards the first side (D1).

3. A honeycomb as set forth in claim 1 **characterised in that** an eccentric lesser displacement (Sl') is respectively provided alternately towards the first side (D1) and the second side (D2) .

4. A honeycomb as set forth in one of claims 1 through 3 **characterised in that** the eccentric displacement is alternately intermittently repeated, wherein the connecting regions, in relation to four ribbons which follow each other in the transverse direction (W), are respectively disposed undisplaced between first and second ribbons (222-1, 222-2) and between third and fourth ribbons (222-3, 222-4), and preferably wherein in each succession of four ribbons, only the connecting regions (123... 423) between first and second ribbons (122-1, 122-2... 422-1, 422-2) are eccentrically displaced relative to the connecting regions between second and third ribbons (122-2, 122-3... 422-2, 422-3).

5. A honeycomb as set forth in claims 1, 2 or 3 wherein connecting regions (123... 423) which follow each other in the transverse direction (W) are always eccentrically displaced relative to each other.

6. A honeycomb as set forth in one of claims 1 through 5 **characterised in that**
- the displacement is frequently and regularly provided in such a way that at least a predominant proportion of the honeycomb-like cells (124... 324) in cross-section in the L/W plane have the substantially identical shape in plan with the at least one longer limb (S2) and preferably the at least one shorter limb (S1); or
- the eccentric displacement is regularly provided in such a way that at least a predominant proportion of the honeycomb-like cells (124; 324) are in the form in the nature of an irregular polygon in cross-section in the L/W plane.

7. A honeycomb as set forth in one of the preceding claims **characterised in that**
- the ratio of the lesser displacement (Sl') to the greater displacement (S2') is S1'/S2' < 0.45, in particular < 0.4; and/or
- the ratio of the lesser displacement (Sl') to the center spacing (I) is Sl'/I < 2/5, in particular Sl'/I < 1/3.

8. A honeycomb as set forth in one of the preceding claims wherein the connecting regions extend strip-like perpendicularly to the longitudinal direction (L) in the direction of the honeycomb thickness (T) and are of a width (B) which is identical throughout in the longitudinal direction (L), the configuration being preferably such that the lesser displacement (Sl') is greater than the width (B) of the connecting regions, in particular greater at least by a factor of 1.5, wherein preferably the width (B) of the connecting regions relative to the center spacing (I) is in the range of 1/8 < B/I < 1/3, preferably 1/6 < B/I < 1/4

9. A honeycomb as set forth in claim 8 **characterised in that**
- the ratio of the greater displacement (S2') to the width (B) of the connecting regions is in the range of 2 < S2'/B < 4, preferably in the range of 2.25 < S2'/B < 3.75; and/or
- the ratio of the lesser displacement (Sl') to the width (B) of the connecting regions is in the range of 1.5 < S1'/B < 2.5, wherein the lesser displacement is preferably approximately double that width (B).

10. A honeycomb as set forth in one of the preceding claims **characterised in that** the cross-section has six limbs (S1, S2, S3) in the manner of an irregular hexagon and is substantially cup-shaped and preferably **in that** the spacing of successive connecting regions in the transverse direction (W) is less than the dimension of the lesser displacement (Sl') in the longitudinal direction (L).

11. A honeycomb as set forth in one of preceding claims 1 through 10 **characterised in that**
- the ribbons are made from plastic material, in particular fiber composite plastic, a thermoplastic material, a thermosetting material or optionally a combination thereof, and the longer limb (S2) preferably extends in a curved configuration, in particular in the shape of an S-curve or tangent-like; or
- the ribbons are made from metal film, in particular aluminum film, and the longer limb (S2) preferably extends technically in a straight line.

12. A honeycomb as set forth in one of the preceding claims **characterised in that**
the honeycomb thickness (T) is of lesser dimension than six times, preferably less than four times, the longer limb (S2); and/or
the lesser displacement (Sl') is of greater dimension by a multiple, in particular at least ten times, than the thickest material used for the ribbons.

13. A sandwich component including a core of honeycomb, the honeycombs of which are closed on at least one side by a face sheet connected to the honeycomb by gluing, wherein the face sheet is preferably made from fiber composite material, a single-layer or multi-layer film material or monolithically from metal, **characterised in that** the core is made from honeycomb as set forth in one of claims 1 through 12.

14. A honeycomb block for the production of honeycomb, in particular deformable honeycomb for example for lightweight components having a curved surface, including:
sheets (125... 425) of sheet-like or film-like material which have a longitudinal direction (L) and which are arranged in areal mutually opposite relationship in the transverse direction (W) transversely relative to the longitudinal direction (L);
a plurality of connecting regions (123... 423) respectively provided between two mutually opposite sheets, in particular adhesive strips, which connect the sheets portion-wise together in firmly bonded relationship in the transverse direction (W) and are arranged at regular spacings, namely with a periodic center spacing (I) which is identical between all connecting regions along the longitudinal direction (L) of a sheet;
**characterised in that**
in relation to three successive sheets (122... 422) a displacement of the connecting regions between first and
second sheets (125-1, 125-2... 425-1, 425-2) relative to the connecting regions between second and third sheets (125-2, 125-3... 425-2, 425-3) towards a first side (D1) of the longitudinal direction (L) is markedly lesser than towards the other second side (D2) of the longitudinal direction (L) ;
so that after an expansion of the block at least a part of the cells (24) in cross-section in the L/W plane are of a form having at least one longer limb (S2) corresponding to the greater displacement and preferably at least one shorter limb (S1) corresponding to the lesser displacement.

15. A process for the production of honeycomb, in particular deformable honeycomb, including:
stack-like deposit of sheets of thin sheet-like or film-like material, wherein the sheets are stacked in areal relationship upon each other in a transverse direction (W) transversely relative to a longitudinal direction (L);
connecting the sheets in firmly bonded relationship in the transverse direction (W) to form a block by a plurality of connecting regions which connect the sheets portion-wise together in firmly bonded relationship in the transverse direction (W) and which are arranged at regular spacings, namely with a periodic center spacing (I) which is identical between all connecting regions along the longitudinal direction (L) of a sheet and in particular are in the form of adhesive strips which are printed at one side on to the sheets;
expanding the block in the transverse direction to form honeycomb-like cells with cavities between the sheets;
dividing the block into a plurality of individual honeycombs, in particular by cutting substantially along separation planes parallel to the L/W plane, **characterised in that**
in relation to three successive sheets a displacement of the connecting regions between first and second sheets relative to the connecting regions between second and third sheets towards a first side (D1) of the longitudinal direction (L) is markedly less than the other second side (D2) of the longitudinal direction (L); so that after expanding at least a part of the cells (24) in cross-section in the L/W plane are of a form having at least one longer limb (S2) corresponding to the greater displacement and preferably at least one shorter limb (S2) corresponding to the lesser displacement.

16. A process as set forth in claim 15 **characterised in that** in the stack-like deposit or in the firmly bonded connecting operation a procedure with the eccentric displacement of the connecting regions is cyclically repeated.

17. A process as set forth in claim 15 **characterised in that**
- in the stack-like deposit or in the firmly bonded connecting operation a procedure is cyclically repeated, in which the eccentric displacement of the connecting regions is always lesser towards the first side (D1); or
- in the stack-like deposit or in the firmly bonded connecting operation a procedure is cyclically repeated, in which the eccentric displacement of the connecting regions is smaller alternately towards the first side (D1) and the second side (D2);
in particular wherein in the stack-like deposit or in the firmly bonded connecting operation a procedure is cyclically repeated, in which the eccentric displacement of the connecting regions is alternately intermittently repeated, wherein the connecting regions in relation to four sheets which follow each other in the transverse direction (W) are respectively undisplaced between first and second sheets and between third and fourth sheets.

## Revendications

1. Structure en nid d'abeille (120 ... 420) pour composants légèrs, en particulier structure déformable en nid d'abeille, par exemple, pour composants légers ayant une surface courbée, comprenant
des rubans allongés (122 ... 422) qui sont fabriqués d'un matériau en forme de feuille ou en forme de film, qui présentent une direction longitudinale (L) et qui sont disposés dans une relation réciproquement opposée en surface dans la direction transversale (W) transversalement par rapport à la direction longitudinale (L);
une pluralité de régions de liaison (123... 423), en particulier des bandes adhésives, qui sont respectivement prévues entre deux rubans opposés l'un à l'autre, qui relient dans le sens transversal (W) les rubans les uns aux autres par sections solidaires en matière et qui sont disposées à intervalles réguliers, à savoir avec un entraxe périodique (I) qui est identique entre toutes les régions de liaison le long de la direction longitudinale (L) d'un ruban; et
des alvéoles (124... 424) du type en forme de nid d'abeilles formant des cavités entre les rubans, **caractérisé en ce que,** par rapport à trois rubans successifs (122 ... 422), un décalage (Sl') des régions de liaison entre le premier et le deuxième ruban (122-1, 122-2 ... 422-1, 422-2) relativement aux régions de liaison entre le deuxième et le troisième ruban (122-2, 122-3 ... 422-2, 422-3), est nettement moins important dans un premier sens (D1) de la direction longitudinale (l) que dans l'autre, second sens (D2) de la direction longitudinale (l); et **en ce que** au moins une partie des alvéoles (24) vues en coupe transversale dans le plan L/W sont d'une forme ayant au moins un membre plus long (S2) correspondant au décalage plus important, et de préférence au moins un membre plus court (S1) correspondant au décalage moins important.

2. Structure en nid d'abeille selon la revendication 1, **caractérisé en ce que** chaque décalage excentrique moins important (S1) est respectivement toujours prévu dans le premier sens (D1).

3. Structure en nid d'abeille selon la revendication 1, **caractérisé en ce que** chaque décalage excentrique moins important (S1) est respectivement prévu alternativement dans le premier sens (D1) et dans le second sens (D2).

4. Structure en nid d'abeille selon l'une quelconque des revendications 1 à 3, **caractérisé en ce que** le décalage excentrique est répété en alternance et par intermittence, les régions de liaison, par rapport à quatre rubans successifs dans la direction transversale (W), sont respectivement disposées sans décalage entre les premier et deuxième rubans (222-1,222-2) et entre les troisième et quatrième rubans (222-3,222-4), il étant prévu de préférence que dans chaque succession de quatre rubans, seulement les régions de liaison (123... 423) entre les premier et deuxième rubans (122-1,122-2... 422-1,422-2) sont en décalage excentrique par rapport aux régions de liaison entre les deuxième et troisième rubans (122-2,122-3... 422-2,422-3) .

5. Structure en nid d'abeille selon les revendications 1, 2 ou 3, dans lequel des régions de liaison (123... 423) qui se succèdent dans la direction transversale (W) sont toujours décalées excentriquement les unes par rapport aux autres.

6. Structure en nid d'abeilles selon l'une des revendications 1 à 5, **caractérisé en ce que**
- le décalage est prévu si fréquemment et régulièrement qu'au moins une proportion prédominante des alvéoles du type en forme de nid d'abeille (124... 324) vues en coupe transversale dans le plan L/W aient ladite forme de base sensiblement identique avec l'au moins un membre plus long (S2) et de préférence l'au moins un membre plus court (S1); ou
- le décalage est prévu si régulièrement qu'au moins une proportion prédominante des alvéoles du type en forme de nid d'abeille (124; 324) vues en coupe transversale dans le plan L/W se présente sous la forme d'un polygone irrégulier.

7. Structure en nid d'abeille selon l'une des revendications précédentes, **caractérisé en ce que**
- le rapport du décalage moins important (S1') au décalage plus important (S2') est S1'/S2' ≤ 0,45, en particulier ≤ 0,4; et/ou
- le rapport du décalage moins important (S1') à l'entraxe (I) est Sl'/I ≤ 2/5, en particulier Sl'/I ≤ 1/3.

8. Structure en nid d'abeille selon l'une des revendications précédentes, **caractérisé en ce que** les régions de liaison s'étendent perpendiculairement à la direction longitudinale (L) dans la direction de l'épaisseur (T) de la structure en nid d'abeille et ont une largeur (B) identique en direction longitudinale (L), la configuration étant de préférence telle que le décalage moins important (S1') est supérieur à la largeur (B) des régions de liaison, en particulier supérieur au moins par un facteur 1.5, avec de préférence, le rapport de la largeur (B) des régions de liaison par rapport à l'entraxe (I) se situant dans la plage de 1/8 ≤ B/I ≤ 1/3, plus particulièrement dans la plage de 1/6 ≤ B/I ≤ 1/4.

9. Structure en nid d'abeille selon la revendication 8, **caractérisé en ce que**
- le rapport entre le décalage plus important (S2') et la largeur (B) des régions de liaison est de l'ordre de 2 ≤ S2'/B ≤ 4, de préférence de l'ordre de 2,25 < S2'/B < 3,75; et/ou
- le rapport du décalage moins important (S1') et la largeur (B) des régions de liaison est de l'ordre de 1,5 ≤ S1' ≤ 2,5, le décalage moins important étant de préférence d'environ le double de cette largeur (B).

10. Structure en nid d'abeille selon l'une des revendications précédentes, **caractérisé en ce que** la section transversale présente six membres (S1, S2, S3) à la manière d'un hexagone irrégulier et est sensiblement en forme de verre en flûte; de préférence avec l'espacement des régions de liaison successives dans la direction transversale (W) étant inférieur à la dimension en direction longitudinale (L) du décalage moins important (S1').

11. Structure en nid d'abeille selon l'une des revendications précédentes 1 à 10, **caractérisé en ce que** les rubans sont en matière plastique, en particulier en matière plastique renforcé de fibres, en matière thermoplastique, en matière thermodurcissable ou, le cas échéant, en une combinaison de ces matières, et le membre le plus long (S2) s'étend de préférence dans une configuration courbe, en particulier sous la forme d'une courbe en S ou en forme de tangente; ou
les rubans sont fabriqués à partir d'un film métallique, en particulier en aluminium, et le membre le plus long (S2) s'étend de préférence en form techniquement rectiligne.

12. Structure en nid d'abeille selon l'une des revendications précédentes, **caractérisé en ce que**
l'épaisseur de la structure en nid d'abeille (T) est d'une dimension inférieure à six fois, de préférence inférieure à quatre fois, celle du membre plus long (S2); et/ou le décalage moins important (S1') est d'une dimension supérieure par un multiple, notamment au moins dix fois supérieure à l'épaisseur du matériau le plus épais utilisé pour les rubans.

13. Composant sandwich comprenant un noyau sous forme de structure en nid d'abeilles dont les alvéoles sont fermées sur au moins un côté par une couche de surface reliée à la structure en nid d'abeilles par collage, dans lequel la couche de surface est fabriquée de préférence à partir d'un matériau composite fibreux, d'un matériau de film monocouche ou multicouche ou d'un matériau métallique monolithique, **caractérisé en ce que le** noyau est fabriqué à partir d'une structure en nid d'abeille selon l'une des revendications 1 à 12.

14. Bloc en nid d'abeille pour la production de structures en nid d'abeille, en particulier structure déformable en nid d'abeille, par exemple pour des composants légers ayant une surface courbée, comprenant:
feuilles (125... 425) de matériau en forme de feuille ou en forme de film qui présentent une direction longitudinale (L) et qui sont disposées dans une relation réciproquement opposée en surface dans la direction transversale (W) transversalement par rapport à la direction longitudinale (L) ;
une pluralité de régions de liaison (123... 423), en particulier des bandes adhésives, qui sont respectivement prévues entre deux feuilles opposées l'une à l'autre, qui relient dans le sens transversal (W) les feuilles les unes aux autres par sections solidaires en matière et qui sont disposées à intervalles réguliers, à savoir avec un entraxe périodique (I) qui est identique entre toutes les régions de liaison le long de la direction longitudinale (L) d'une feuille;
**caractérisé en ce que**
par rapport à trois feuilles successives (122 ... 422), un décalage des régions de liaison entre les première et
deuxième feuilles (122-1, 122-2 ... 422-1, 422-2) relativement aux régions de liaison entre les deuxième et
troisième feuilles (122-2, 122-3 ... 422-2, 422-3), est nettement moins important dans un premier sens (Dl) de la direction longitudinale (L) que dans l'autre, second sens (D2) de la direction longitudinale (L);
de sorte à ce qu'après une expansion du bloc au moins une partie des alvéoles vues en coupe transversale dans le plan L/W sont d'une forme ayant au moins un membre plus long correspondant au décalage plus important, et de préférence au moins un membre plus court correspondant au décalage moins important
de sorte à ce qu'après une expansion du bloc au moins une partie des alvéoles (24) vues en coupe transversale dans le plan L/W sont d'une forme ayant au moins un membre (S2) plus long correspondant au décalage plus important, et de préférence au moins un membre (S1) plus court correspondant au décalage moins important.

15. Procédé pour la fabrication de strucutre en nids d'abeille, en particulier de structure déformable en nids d'abeille, y compris
déposer en forme de pile des feuilles de matériau mince en forme de feuille ou en forme de film, dans lequel les feuilles sont empilées avec leur surface les unes sur les autres dans une direction transversale (W) transversalement par rapport à une direction longitudinale (L) des feuilles; liaison des feuilles en relation de manière solidaire en matière dans le sens transversal (W) pour former un bloc par le biais d'une pluralité de régions de liaison qui relient par sections ensemble les feuilles de manière solidaire en matière dans le sens transversal (W) et qui sont disposées à intervalles réguliers, à savoir avec un entraxe périodique (I) qui est identique entre toutes les régions de liaison le long de la direction longitudinale (L) d'une feuille et en particulier sous forme de bandes adhésives qui sont imprimées unilatéralement sur les feuilles;
expansion du bloc dans la direction transversale pour former des alvéoles du type en nid d'abeilles avec des cavités entre les feuilles;
séparation du bloc en une pluralité de structures en nid d'abeille individuelles, notamment par découpage sensiblement le long de plans de séparation parallèles au plan L/W, **caractérisé en ce que**
par rapport à trois feuilles successives (122 ... 422), un décalage des régions de liaison entre les première et deuxième feuilles (122-1, 122-2 ... 422-1, 422-2) relativement aux régions de liaison entre les deuxième et troisième feuilles (122-2, 122-3 ... 422-2, 422-3) est nettement moins important dans un premier sens (Dl) de la direction longitudinale (L) que dans l'autre, second sens (D2) de la direction longitudinale (L); de sorte à ce qu'après l'expansion au moins une partie des alvéoles (24) vues en coupe transversale dans le plan L/W sont d'une forme ayant au moins un membre (S2) plus long correspondant au décalage plus important, et de préférence au moins un membre (S2) plus court correspondant au décalage moins important.

16. Procédé selon la revendication 15, **caractérisé en ce que** durant le dépôt en forme de pile ou durant l'opération de liaison de manière solidaire en matière, un schéma avec décalage excentrique des régions de liaison est répété cycliquement.

17. Procédé selon la revendication 15, **caractérisé en ce que**
- durant le dépôt en forme de pile ou durant l'opération de liaison de manière solidaire en matière, un schéma est répété cycliquement, dans lequel le décalage excentrique des régions de liaison est toujours moins important vers le premier côté (D1); ou
- durant le dépôt en forme de pile ou durant l'opération de liaison de manière solidaire en matière, un schéma est répété cycliquement, dans lequel le décalage excentrique des régions de liaison est moins imporant alternativement vers le premier côté (D1) et vers le second côté (D2);
en particulier dans lequel, durant le dépôt en forme de pile ou durant l'opération de liaison de manière solidaire en matière, un schéma est répété cycliquement, dans lequel le déplacement excentrique des régions de liaison est répété alternativement et de façon intermittente, dans lequel les régions de liaison, par rapport à quatre feuilles successives dans la direction transversale (W), sont respectivement non déplacées entre les première et deuxième feuilles et entre les troisième et quatrième feuilles.
